(19) Europäisches Patentamt
European Patent Office
Office européen des brevets

(11) **EP 4 621 652 A1**

(12) **EUROPEAN PATENT APPLICATION**

(43) Date of publication:
24.09.2025 Bulletin 2025/39

(21) Application number: 25164210.4

(22) Date of filing: 17.03.2025

(51) International Patent Classification (IPC):
*G06N 3/0475* (2023.01)  *G06N 3/0495* (2023.01)

(52) Cooperative Patent Classification (CPC):
G06N 3/0475; G06N 3/045; G06N 3/0495

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.03.2024 GB 202403969
20.03.2024 GB 202403991

(71) Applicant: Imagination Technologies Limited
Kings Langley, Hertfordshire WD4 8LZ (GB)
(72) Inventors:
• Demirci, Gunduz Vehbi
Kings Langley, WD4 8LZ (GB)
• Atherton, Timothy James
Kings Langley, WD4 8LZ (GB)
• Schamp, Edward Jack Louis
Kings Langley, WD4 8LZ (GB)
• Dikici, Cagatay
Kings Langley, WD4 8LZ (GB)

(74) Representative: Slingsby Partners LLP
1 Kingsway
London WC2B 6AN (GB)

(54) **ATTENTION-BASED NEURAL NETWORKS**

(57) A method of, and hardware logic for, implementing a compressed attention-based neural network are described herein. The compressed attention-based neural network comprises a compressed attention layer arranged to implement an attention function. An embedded tensor is received at the compressed attention layer. The compressed attention layer rearranges and partitions elements of the embedded tensor to form one or more embedded sub-matrices. The compressed attention layer applies a set of one or more Key weight sub-matrices to the respective one or more embedded sub-matrices, and concatenates the results of applying the one or more Key weight sub-matrices to the respective one or more embedded sub-matrices, to determine a Key matrix. The compressed attention layer applies a set of one or more Query weight sub-matrices to the respective one or more embedded sub-matrices, and concatenates the results of applying the one or more Query weight sub-matrices to the respective one or more embedded sub-matrices, to determine a Query matrix. The compressed attention layer applies a set of one or more Value weight sub-matrices to the respective one or more embedded sub-matrices, and concatenates the results of applying the one or more Value weight sub-matrices to the respective one or more embedded sub-matrices, to determine a Value matrix. The compressed attention layer implements the attention function using the determined Key matrix, the determined Query matrix and the determined Value matrix.

FIGURE 1C

**Description**

CROSS-REFERENCE TO RELATED APPLICATION

This application claims priority from UK patent applications 2403969.5 and 2403991.9 which were both filed on 20 March 2024, which are herein incorporated by reference in their entirety.

TECHNICAL FIELD

The present disclosure is directed to attention-based neural networks. In particular, methods of, and processing systems for, compressing an attention-based neural network are described herein. Furthermore, methods of, and hardware logic for, implementing a compressed attention-based neural network are described herein.

BACKGROUND

A neural network (NN) is a form of artificial network comprising a plurality of interconnected layers that can be used for machine learning applications. Each layer of a neural network may be one of a plurality of different types. The type of operation that is performed on input data of a layer depends on the type of layer. An attention layer is one type of layer that may be implemented in a neural network. A neural network which comprises one or more attention layers may be referred to as an attention-based neural network.

"Attention" refers to a technique or structural configuration that allows a neural network to focus on a certain part (or certain parts) of its input. Attention can be used to characterise relationships between different parts of different data. Applications of attention include, but are not limited to, natural language processing (NLP) and computer vision. In NLP, for example, attention mechanisms may enable a neural network model to attend to certain words in a sentence. In computer vision, attention may enable the neural network to attend to certain portions of a scene, for example.

Attention mechanisms can be categorised into two broad groups:

- "Self-attention" manages and quantifies the interdependence among a set of input elements themselves.

- "Cross attention" (also known as general attention) manages and quantifies the interdependence between two sets of input elements.

These different types of attention are used differently by different neural network architectures. In NLP, for instance, self-attention can be used by itself to understand the context of a sentence. It is applied in this way in Google's bidirectional encoder representations from transformers (BERT) technology.

In applications such as machine translation, self-attention and cross attention may be applied together, to allow the network to focus on different parts of an input sentence in an input language, and to establish relationships between parts of the input sentence and the target sentence in the target language.

Transformer networks are currently a leading example of attention-based networks. The transformer architecture was introduced in Vaswani et al. ("Attention is all you need", in Advances in Neural Information Processing Systems 30 (NIPS) 2017, https://arxiv.org/abs/1706.03762). The transformer model architecture was proposed as an alternative to the use of recurrence for sequence modelling. The original architecture was based around an encoder stack and a decoder stack, each of which is composed of multiple layers. However, more generally, transformer networks can be built around various configurations of encoder stack and/or decoder stack, such as:

- Single encoder stack, multiple decoder stacks -see Vaswani et al.;

- Single encoder stack, single decoder stack -for example, the object detection transformer (DETR) network;

- Single encoder stack - examples including BERT, vision transformer, and word language model;

- Multiple decoder stacks - for example, the generative pre-trained transformer (GPT) 1/2/3 family of models.

Transformer networks have proven to offer a powerful attention-based architecture, with state-of-the-art accuracy, across multiple modalities and tasks. These include, for 2-D images: image classification, object detection, action recognition, segmentation, super-resolution, enhancement, and colorization; for video: activity recognition and video forecasting (a type of time series forecasting); for 3D is representations, such as meshes or point clouds: classification and segmentation; for text: language modelling and generation, next sentence prediction, classification, and question-answering; for audio: speech recognition and voice synthesis. There are also multimodal applications, where inputs and outputs come from different modalities. Examples in this area include visual-question answering, reasoning, and image captioning.

An attention function can be described as mapping a query and a set of key-value pairs to an output. The output can be computed as a weighted sum of the values, where the weight assigned to each value is computed by a compatibility function of the query with the corresponding key. The keys, the queries and the values can be represented with a Key matrix (K), a Query matrix (Q) and a Value matrix (V). An attention layer in an attention-based neural network is arranged to implement an attention function in dependence on the Key matrix, the Query matrix and the Value matrix.

When a neural network is stored, e.g. when an attention-based neural network is stored, data representing all of the operations to be performed by the layers of the neural network, e.g. the weights of matrices to be applied in the layers and data defining the connections between different layers within the neural network, needs to be stored. Typically, a large amount of data is needed to represent a neural network. When implementing a neural network on hardware logic, e.g. a neural network accelerator (NNA) or a graphics processing unit (GPU), the data defining the neural network is typically stored in an "off-chip" memory. The hardware logic can implement a layer of the neural network by reading in data defining that layer (e.g. data defining the weights of matrices to be used in that layer) at run-time. A large amount of memory bandwidth may be required in order to read in the data from the off-chip memory. It is desirable to decrease the amount of data that needs to be read in order to implement a neural network. Furthermore, when a neural network is implemented it is desirable for the number of operations, e.g. multiply-accumulate (MAC) operations, to be reduced, thereby reducing the latency and/or power consumption of implementing the neural network.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a method of implementing a compressed attention-based neural network on hardware logic, wherein the compressed attention-based neural network comprises a compressed attention layer arranged to implement an attention function, the method comprising, at the compressed attention layer:

receiving an embedded tensor;

rearranging and partitioning elements of the embedded tensor to form one or more embedded sub-matrices;

applying a set of one or more Key weight sub-matrices to the respective one or more embedded sub-matrices, and concatenating the results of applying the one or more Key weight sub-matrices to the respective one or more embedded sub-matrices, to determine a Key matrix;

applying a set of one or more Query weight sub-matrices to the respective one or more embedded sub-matrices, and concatenating the results of applying the one or more Query weight sub-matrices to the respective one or more embedded sub-matrices, to determine a Query matrix;

applying a set of one or more Value weight sub-matrices to the respective one or more embedded sub-matrices, and concatenating the results of applying the one or more Value weight sub-matrices to the respective one or more embedded sub-matrices, to determine a Value matrix; and

implementing the attention function using the determined Key matrix, the determined Query matrix and the determined Value matrix.

Said rearranging and partitioning elements of the embedded tensor may comprise reordering elements of the embedded tensor.

Said rearranging and partitioning of the elements of the embedded tensor may match a rearrangement and partitioning of the rows and columns of a Query weight matrix, a Key weight matrix and a Value weight matrix that is used to determine the set of one or more Key weight sub-matrices, the set of one or more Query weight sub-matrices and the set of one or more Value weight sub-matrices.

The embedded tensor may represent: (i) an input sequence, (ii) an output from an encoder layer in the compressed attention-based neural network, or (iii) an output from a decoder layer in the compressed attention-based neural network.

The method may further comprise:

receiving an input sequence;
determining the embedded tensor so that it represents the input sequence; and
providing the embedded tensor to the compressed attention layer.

Said rearranging and partitioning elements of the embedded tensor to form one or more embedded sub-matrices may be performed by: (i) one or more gather layers of the compressed attention layer, or (ii) a gather layer and a splitting layer of the compressed attention layer.

The method may further comprise applying an output matrix to the result of implementing the attention function before providing an output of the compressed attention layer, and wherein an ordering of the rows and columns of the output matrix is complementary to said rearrangement of the elements of the embedded tensor.

Said implementing the attention function may comprise using a scaled-dot product attention calculation.

The attention function, Attention($Q$, $K$, $V$), may be given by:

$$\text{Attention}(Q, K, V) = \text{softmax}\left(\frac{QK^T}{\sqrt{d_k}}\right)V$$

where $Q$ is the Query matrix, $K^T$ is the transpose of the Key matrix, $V$ is the Value matrix, and $d_k$ is the dimensionality of the Query matrix and the Key matrix.

The compressed attention layer may be configured to implement multi-head attention.

The compressed attention layer may be configured to implement multi-head attention by:

splitting the Key matrix, Query matrix and Value matrix into a plurality of heads;
determining a head attention result for each of the heads; and
concatenating the determined head attention results for each of the heads to determine an attention result for the compressed attention layer.

The compressed attention layer may be:

a self-attention layer within an encoder of the compressed attention-based neural network;
a self-attention layer within a decoder of the compressed attention-based neural network; or
an encoder-decoder attention layer within a decoder of the compressed attention-based neural network.

The encoder and/or the decoder may comprise a feed-forward layer and/or a normalisation layer.

The compressed attention layer may be an encoder-decoder attention layer within a decoder of the compressed attention-based neural network. The Key matrix and the Value matrix may be determined using a first embedded tensor representing an output from an encoder layer in the compressed attention-based neural network, and the Query matrix may be determined using a second embedded tensor representing an output from a previous layer in the decoder.

The compressed attention-based neural network may comprise a transformer network.

The compressed attention-based neural network may be a large language model.

The compressed attention-based neural network may be implemented to perform one of: natural language processing, language translation, computer vision processing, image processing, text processing and speech processing.

There is provided hardware logic configured to implement a compressed attention-based neural network, wherein the compressed attention-based neural network comprises a compressed attention layer arranged to implement an attention function, wherein the compressed attention layer is configured to:

receive an embedded tensor;

rearrange and partition elements of the embedded tensor to form one or more embedded sub-matrices;

apply a set of one or more Key weight sub-matrices to the respective one or more embedded sub-matrices, and concatenate the results of applying the one or more Key weight sub-matrices to the respective one or more embedded sub-matrices, to determine a Key matrix;

apply a set of one or more Query weight sub-matrices to the respective one or more embedded sub-matrices, and concatenate the results of applying the one or more Query weight sub-matrices to the respective one or more embedded sub-matrices, to determine a Query matrix;

apply a set of one or more Value weight sub-matrices to the respective one or more embedded sub-matrices, and concatenate the results of applying the one or more Value weight sub-matrices to the respective one or more embedded sub-matrices, to determine a Value matrix; and

implement the attention function using the determined Key matrix, the determined Query matrix and the determined Value matrix.

The compressed attention layer may comprise one or more gather layers configured to rearrange and partition the elements of the embedded tensor to form the one or more embedded sub-matrices.

The compressed attention layer may comprise:

a gather layer configured to rearrange the elements of the embedded tensor; and
a splitting layer configured to partition the output from the gather layer to form the one or more embedded sub-matrices.

The compressed attention layer may comprise:

a Key concatenation layer configured to concatenate the results of applying the one or more Key weight sub-matrices to the respective one or more embedded sub-matrices, to determine the Key matrix;

a Query concatenation layer configured to concatenate the results of applying the one or more Query weight sub-matrices to the respective one or more embedded sub-matrices, to determine the Query matrix; and

a Value concatenation layer configured to concatenate the results of applying the one or more Value weight sub-matrices to the respective one or more embedded sub-matrices, to determine the Value matrix.

The compressed attention layer may comprise a processing block configured to apply an output matrix to the result of implementing the attention function before an output of the compressed attention layer is provided, wherein an ordering of the rows and columns of the output matrix is complementary to said rearrangement of the elements of the embedded tensor.

The compressed attention layer may be configured to implement multi-head attention.

The compressed attention layer may be:

a self-attention layer within an encoder of the compressed attention-based neural network;

a self-attention layer within a decoder of the compressed attention-based neural network; or

an encoder-decoder attention layer within a decoder of the compressed attention-based neural network.

The encoder and/or the decoder may comprise a feed-forward layer and/or a normalisation layer.

The compressed attention-based neural network may comprise a stack of encoders and a stack of decoders.

The hardware logic may comprise a neural network accelerator or a graphics processing unit.

There is provided a compressed attention-based neural network comprising a compressed attention layer arranged to implement an attention function, wherein the compressed attention layer is configured to:

receive an embedded tensor;

rearrange and partition elements of the embedded tensor to form one or more embedded sub-matrices;

apply a set of one or more Key weight sub-matrices to the respective one or more embedded sub-matrices, and concatenate the results of applying the one or more Key weight sub-matrices to the respective one or more embedded sub-matrices, to determine a Key matrix;

apply a set of one or more Query weight sub-matrices to the respective one or more embedded sub-matrices, and concatenate the results of applying the one or more Query weight sub-matrices to the respective one or more embedded sub-matrices, to determine a Query matrix;

apply a set of one or more Value weight sub-matrices to the respective one or more embedded sub-matrices, and concatenate the results of applying the one or more Value weight sub-matrices to the respective one or more embedded sub-matrices, to determine a Value matrix; and

implement the attention function using the determined Key matrix, the determined Query matrix and the determined Value matrix.

There is provided a computer readable storage medium having the compressed attention-based neural network encoded thereon.

There may be provided a computer implemented method of compressing an attention-based neural network, the method comprising:

receiving an attention-based neural network comprising an attention layer, said attention layer being arranged to implement an attention function in dependence on a Key matrix, a Query matrix and a Value matrix, wherein the attention layer is configured to use a Key weight matrix to determine the Key matrix, use a Query weight matrix to determine the Query matrix, and use a Value weight matrix to determine the Value matrix;

determining a combined matrix which is the same size and shape as the Key weight matrix, the Query weight matrix and the Value weight matrix, wherein for each element of the combined matrix: (i) that element of the combined matrix is determined to be zero if corresponding elements of the Key weight matrix, the Query weight matrix and the Value weight matrix are zero, and (ii) that element of the combined matrix is determined to be non-zero if at least one of the corresponding elements of the Key weight matrix, the Query weight matrix and the Value weight matrix is non-zero;

determining a rearrangement of the rows and columns of the combined matrix that would gather the plurality of non-zero values of the combined matrix into a set of one or more combined sub-matrices, the set of one or more combined sub-matrices having a greater average density of non-zero values than the combined matrix;

rearranging the rows and columns of the Key weight matrix, the Query weight matrix and the Value weight matrix to match the determined rearrangement of the rows and columns of the combined matrix so as to determine a set of one or more Key weight sub-matrices, a set of one or more Query weight sub-matrices and a set of one or more Value weight sub-matrices corresponding to the set of one or more combined sub-matrices; and

outputting a compressed attention-based neural network comprising a compressed attention layer arranged to implement the attention function by performing a compressed operation in dependence on: (i) the set of one or more Key weight sub-matrices, (ii) the set of one or more Query weight sub-matrices, and (iii) the set of one or more Value weight sub-matrices.

There may be provided a processing system for compressing an attention-based neural network, the processing system comprising at least one processor configured to:

receive an attention-based neural network comprising an attention layer, said attention layer being arranged to implement an attention function in dependence on a Key matrix, a Query matrix and a Value matrix, wherein the attention layer is configured to use a Key weight matrix to determine the Key matrix, use a Query weight matrix to determine the Query matrix, and use a Value weight matrix to determine the Value matrix;

determine a combined matrix which is the same size and shape as the Key weight matrix, the Query weight matrix and the Value weight matrix, wherein for each element of the combined matrix: (i) that element of the combined matrix is determined to be zero if corresponding elements of the Key weight matrix, the Query weight matrix and the Value weight matrix are zero, and (ii) that element of the combined matrix is determined to be non-zero if at least one of the corresponding elements of the Key weight matrix, the Query weight matrix and the Value weight matrix is non-zero;

determine a rearrangement of the rows and columns of the combined matrix that would gather the plurality of non-zero values of the combined matrix into a set of one or more combined sub-matrices, the set of one or more combined sub-matrices having a greater average density of non-zero values than the combined matrix;

rearrange the rows and columns of the Key weight matrix, the Query weight matrix and the Value weight matrix to match the determined rearrangement of the rows and columns of the combined matrix so as to determine a set of one or more Key weight sub-matrices, a set of one or more Query weight sub-matrices and a set of one or more Value weight sub-matrices corresponding to the set of one or more combined sub-matrices; and

output a compressed attention-based neural network comprising a compressed attention layer arranged to implement the attention function by performing a compressed operation in dependence on: (i) the set of one or more Key weight sub-matrices, (ii) the set of one or more Query weight sub-matrices, and (iii) the set of one or more Value weight sub-matrices.

The processing system and/or hardware logic may be embodied in hardware on an integrated circuit. There may be provided a method of manufacturing, at an integrated circuit manufacturing system, a processing system and/or hardware logic. There may be provided an integrated circuit definition dataset that, when processed in an integrated circuit manufacturing system, configures the system to manufacture a processing system and/or hardware logic. There may be provided a non-transitory computer readable storage medium having stored thereon a computer readable description of a processing system that, when processed in an integrated circuit manufacturing system, causes the integrated circuit manufacturing system to manufacture an integrated circuit embodying a processing system and/or hardware logic.

There may be provided an integrated circuit manufacturing system comprising: a non-transitory computer readable storage medium having stored thereon a computer readable description of the processing system and/or hardware logic; a layout processing system configured to process the computer readable description so as to generate a circuit layout description of an integrated circuit embodying the processing system and/or hardware logic; and an integrated circuit generation system configured to manufacture the processing system and/or hardware logic according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1A illustrates an implementation of one layer of an encoder stack for a transformer network, according to an example;
Figure 1B illustrates an implementation of one layer of a decoder stack for a transformer network, according to an example;
Figure 1C illustrates an attention layer configured to implement a scaled dot-product attention calculation within an attention-based neural network;
Figure 2A shows an example attention-based neural network;
Figure 2B shows more detail of the attention-based neural network shown in Figure 2A;
Figure 3 illustrates an attention layer configured to implement multi-head attention;
Figure 4 shows an example system for implementing a neural network, such as an attention-based neural network;
Figure 5 shows a processing system for compressing an attention-based neural network;
Figure 6 shows an example matrix comprising a plurality of elements representative of non-zero values and a plurality of elements representative of zero values;
Figure 7 shows an example rearranged matrix comprising a plurality of sub-matrices;
Figure 8 shows an example hypergraph model;
Figure 9 shows a first example of how a compressed operation can be performed using a plurality of sub-matrices;
Figure 10 shows a second example of how a compressed operation can be performed using a plurality of sub-matrices;
Figure 11A illustrates a $C_{out} \times C_{in}$ plane of a set of coefficients having dimensions $C_{out} \times C_{in} \times H_w \times W_w$.
Figure 11B illustrates how a compressed convolution operation can be performed using subsets of the set of coefficients of a convolution layer;
Figure 12 is a flow chart for a method of compressing an attention-based neural network;
Figure 13 illustrates a Query weight matrix, a Key weight matrix and a Value weight matrix which each comprise a plurality of elements which are zero and a plurality of elements which are non-zero;
Figure 14A shows a hypergraph model illustrating how the Value weight matrix could be partitioned;
Figure 14B shows a rearranged Value weight matrix partitioned in accordance with the hypergraph model shown in Figure 14A;
Figure 15A illustrates a combined matrix with zero and non-zero elements determined based on the Query weight matrix, the Key weight matrix and the Value weight matrix shown in Figure 13;
Figure 15B shows a hypergraph model illustrating how the combined matrix is partitioned;

Figure 15C shows a rearranged combined matrix partitioned in accordance with the hypergraph model shown in Figure 15B;

Figure 15D shows a rearranged Query weight matrix, a rearranged Key weight matrix and a rearranged Value weight matrix, which have been rearranged in accordance with the hypergraph model shown in Figure 15B;

Figure 16 is a flow chart for a method of implementing a compressed attention-based neural network;

Figure 17 shows an example of a compressed attention layer of a compressed attention-based neural network;

Figure 18 shows another example of a compressed attention layer of a compressed attention-based neural network;

Figure 19 shows a computer system in which a processing system is implemented; and

Figure 20 shows an integrated circuit manufacturing system for generating an integrated circuit embodying a processing system and/or hardware logic.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only. In the following description, transformer networks will be used as an example of an attention-based neural network. This is a convenient and useful example, since such networks have been found to produce good performance in many tasks. Nevertheless, it should be understood that the scope of the present disclosure is not limited to transformer networks. The present disclosure is equally applicable to other attention-based neural networks.

For understanding the transformer network examples in the following description, it is assumed that the reader will already be familiar with the paper of Vaswani et al., cited above.

An attention-based neural network, e.g. a transformer network, learns how best to route information between pieces of an input sequence (known as tokens). For example, the input sequence could be a sequence of words, such as "the fox jumped over the lazy dog", and each word is considered to be a token in the input sequence. The attention-based neural network can learn to associate the word "fox" with the word "jumped" and to associate the word "lazy" with the word "dog". Attention can be applied to any type of data that can be formatted as a sequence. For instance, it can also be used with image data, where typically an image is represented as a sequence of patches that are then used as tokens in a sequence.

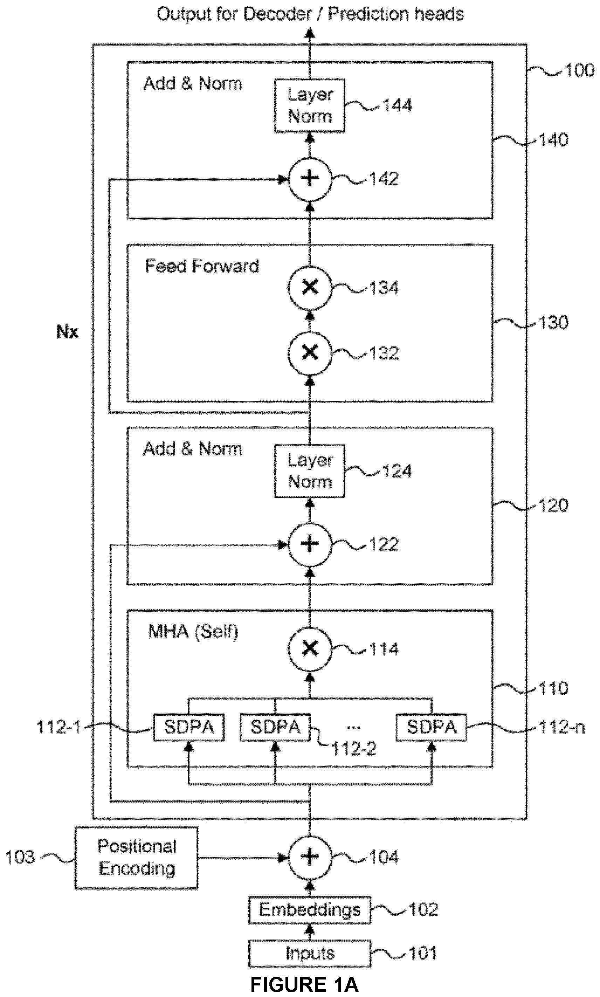

A transformer network may comprise an encoder stack comprising one or more encoders. A transformer network may also (or alternatively) comprise a decoder stack comprising one or more decoders. Figure 1A illustrates an implementation of one layer 100 of an encoder stack in a transformer network. There may be many such layers (or "encoders") in the encoder stack, as indicated by the "Nx" annotation in the drawing. The number of encoders (N) in the encoder stack is at least one, but will be greater than one in many examples. The general structure of the encoder will be familiar from Vaswani et al. The inputs to the encoder stack are based on input sequences of "tokens" or "elements". Before passing them to the first layer of the encoder, the inputs 101 are "embedded" by means of a linear projection 102. For example, each input token (e.g. each input word in a sentence) is converted into a vector (i.e. a numerical structure) using an embedding algorithm. A positional encoding 103 may be added to the result of the embedding, at adder 104. The positional encoding 103 injects information about the position of the tokens in the sequence. The output from the adder 104 is an embedded tensor representing the input sequence. The embedded tensor may be a vector.

Like Vaswani et al, the present example uses periodic functions of different frequencies for the positional encoding. It should be understood that the embedding and positional encoding is implemented only at the input to the first layer of the encoder stack. Subsequent layers in the stack (not shown in Figure 1A) will take their inputs directly from the outputs of the preceding layers.

The layer 100 of the encoder stack comprises: a multi-head attention block 110 (which is an example of an attention layer); an add and normalise block 120; a feedforward block 130; and a further add and normalise block 140. The multi-head attention block 110 executes self-attention on the inputs. In the present example, this is done by a plurality of scaled dot-product attention (SDPA) blocks 112-1 to 112-n, where n is the number of heads. However, it should be understood that other forms of attention calculation could be used in place of the SDPA. The outputs of the multiple heads are concatenated and subjected to a linear projection 114. The output of the multi-head attention block 110 is provided as input to the add and normalise block 120. This block 120 comprises an adder 122, configured to add the output of the multi-head attention block 110 to the input to that block. Layer normalisation 124 is applied to the result of the addition 122.

The output of the add and normalise block 120 is provided as input to the feedforward block 130. This block comprises one or more feedforward neural network layers. In the present example, there are two feedforward layers 132 and 134. The "blocks" (e.g. the multi-head attention block and the feedforward block) may be referred to as "layers" (e.g. as a multi-head attention layer and a feedforward layer).

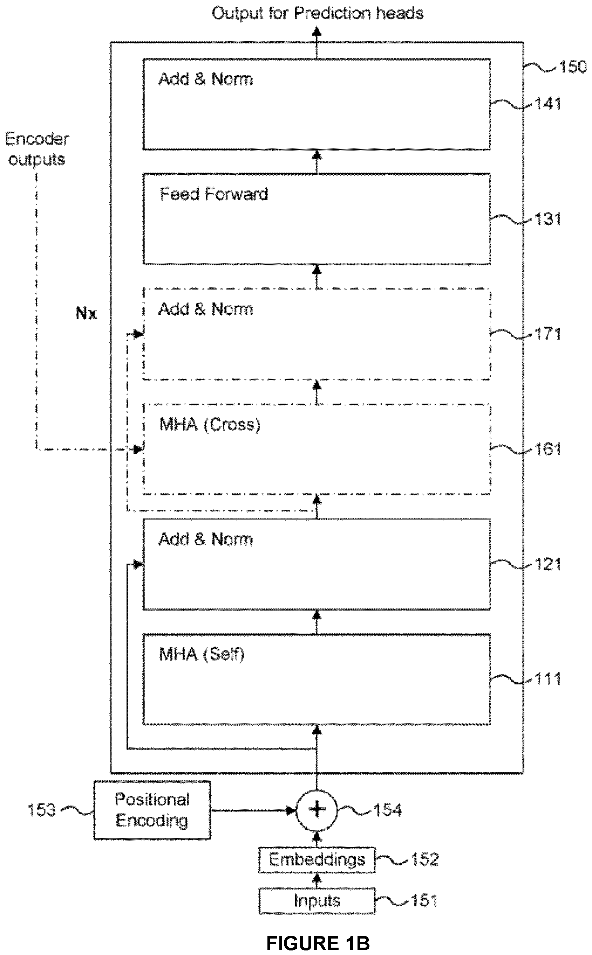

The output of the feedforward block 130 is provided as input to the further add and normalise block 140. This has a similar structure to the add and normalise block 120. An adder 142 is configured to add the output of the feedforward block 132 to the input to that block. A layer normalisation 144 is applied to the output of the addition 142. The output of the further add and normalise block 140 forms the output of this layer of the encoder stack. If the current layer is not the final layer of the encoder stack, the output of the add and normalise block 140 is input to the next layer (i.e. to the next encoder) of the encoder stack. If the current layer is the final layer of the encoder stack, then the output of the add and normalise block 140 forms the output of the encoder stack. This output may be provided to one or more prediction heads, or to a decoder stack, depending on the particular application of the transformer network. That is, the encoder stack may be used alone or in conjunction with a decoder stack (such as the decoder stack described below with reference to Figure 1B).

Figure 1B illustrates an implementation of one layer (i.e. one 'decoder') 150 of a decoder stack of a transformer network. Depending on the particular application of the transformer network, the decoder stack may be used alone, or in conjunction with an encoder stack (such as the encoder stack described above with reference to Figure 1A). As with the encoder stack, the decoder stack in general includes a number of layers, N, where N is greater than or equal to 1. The layer 150 of the decoder stack illustrated in Figure 1B is shown as the first layer of the decoder stack. Before passing them to the layer 150, the inputs 151 are embedded, at block 152, and a positional encoding 153 may be added at block 154. In this respect, blocks 152 and 154 are analogous to blocks 102 and 104. However, the particular embeddings and positional encodings are generally not identical between an encoder and decoder. The inputs are also typically different. For example, in a transformer network that is trained for language translation, the tokens may be words. In the training phase, the encoder stack takes as input a sequence of words (e.g. a sentence) in the source language. The decoder stack takes as input a sequence of words (e.g. a sentence) in the target language. The embedding (which may be learned) and the positional encoding may be different for each language. The output from the adder 154 is an embedded tensor representing the input sequence. The embedded tensor may be a vector.

As with the encoder layer 100, the general structure of the decoder layer 150 will be familiar from Vaswani et al. The layer 150 of the decoder stack comprises: a first multi-head attention block 111 (which is an example of an attention layer); a first add and normalise block 121; a second multi-head attention block 161 (which is an example of an attention layer); a second add and normalise block 171; a feedforward block 131; and a further add and normalise block 141. The multi-head attention block 111 has the same structure as the multi-head attention block 110 of the encoder layer. It executes self-attention on the inputs using a plurality of SDPA blocks (not shown in Figure 1B). As noted above, the "blocks" may be referred to as "layers".

The output of the multi-head attention block 111 is provided as input to the first add and normalise block 121. This is similar in structure and function to the add and normalise block 120 of the encoder layer. When the decoder stack is used together with the encoder stack, the output of the add and normalise block 121 is provided as input to the second multi-head attention block 161. This block 161 also receives as an input the output of the encoder stack. The second multi-head attention block 161 executes cross-attention (rather than self-attention) between the decoder inputs and the encoder inputs. The output of the second multi-head attention block 161 is provided as input to a second add and normalise block 171. Similarly to the add and normalise blocks 120 and 121, this block adds together the inputs and outputs of the second multi-head attention block 161 and performs layer normalisation on the result of the addition. The output of the second add and normalise block 171 is provided as input to the feedforward block 131. When the decoder stack is used alone - that is, without the encoder stack - the feedforward block 131 receives its input directly from the first add and normalise block 121.

The feedforward block 131 is similar in structure and function to the feedforward block 130 of the encoder layer. It comprises one or more feedforward neural network layers - for example, two feedforward layers. The output of the feedforward block 131 is provided as input to a further add and normalise block 141, which is similar in structure and function to the add and normalise block 140 at the end of the encoder layer. The output of the further add and normalise block 141 forms the output of this layer of the decoder stack. If the current layer is not the final layer of the decoder stack, the output of the add and normalise block 141 is input to the next layer (i.e. to the next decoder) of the decoder stack. If the current layer is the final layer of the decoder stack, then the output of the add and normalise block 141 forms the output of the decoder stack. This output may be provided to one or more prediction heads.

In some applications of transformer networks, the decoder stack is executed iteratively, for a number of iterations that may be fixed or variable. For instance, using the machine translation example mentioned above, the decoder stack may be executed for several iterations, until the decoder outputs an "end" token, which indicates that the end of the sentence has been reached in the target language, and terminates the iterations. At each iteration, one more word of the corresponding sentence in the target language would be predicted.

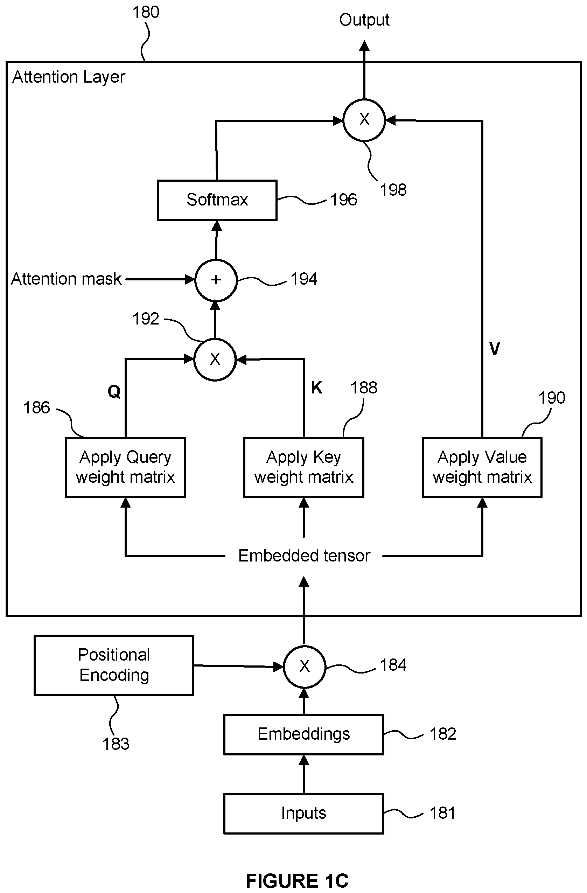

Figure 1C illustrates an attention layer 180 configured to implement a scaled dot-product attention (SDPA) calculation within an attention-based neural network. The attention layer 180 is configured to implement a single SDPA calculation, but it should be understood that if the attention layer is implementing multi-head attention then a respective SDPA calculation may be performed for each head. As described above, an input sequence 181 is embedded, at block 182, and a positional encoding 183 may be added at block 184, to determine an embedded tensor representing the input sequence. In this respect, blocks 182 and 184 are analogous to blocks 102 and 104 and to blocks 152 and 154 described above. As described above, the embedded tensor may be a vector, and may be referred to as an "embedded vector" or an "embedding". The embedded tensor is passed to the attention layer 180. The attention layer 180 determines a Query matrix **(Q)**, a Key matrix **(K)** and a Value matrix **(V)** based on the embedded tensor. In particular, the attention layer applies a Query weight matrix **(W$_Q$)** to the embedded tensor at block 186 to determine the Query matrix; the attention layer applies a Key weight matrix **(W$_K$)** to the embedded tensor at block 188 to determine the Key matrix; and the attention layer applies a Value weight matrix **(W$_V$)** to the embedded tensor at block 190 to determine the Value matrix. In the case of self-attention layers (e.g. the self-attention layers 110 and 111), the Query, Key and Value matrices **(Q, K,** and **V)** are determined from the same embedded tensor, as shown in Figure 1C. In the case of an encoder-decoder attention layer (e.g. the cross-attention layer 161) implemented in a decoder, the Key and Value matrices **(K,** and **V)** are determined from an embedded tensor output from an encoder, whereas the Query matrix **(Q)** is determined from an embedded tensor output from a previous layer in the decoder. The values of the elements of the Key weight matrix **(W$_K$),** the Query weight matrix **(W$_Q$)** and the Value weight matrix **(W$_V$)** may be trained during a process of training the neural network.

The Query matrix **(Q)** and the Key matrix **(K)** are input to a matrix multiplication 192. In general, if there are multiple batches of input data, the matrix multiplication block 192 may be configured to perform a batch matrix multiplication. The matrix multiplication may be implemented by finding the transpose of the Key matrix and multiplying the Query matrix **(Q)** with the transpose of the Key matrix **(K$^T$).** The output of the (batch) matrix multiplication 192 provides one input to an addition operation 194. The other input to the addition 194 is an attention mask defined for the input sequence. For example, if input sequence is padded, the attention mask may contain values of zero in positions corresponding to the original input sequence; and in positions corresponding to the padding of the input sequence, the attention mask may contain large negative values. The intention is that the output of the addition 194 is dominated by these large negative values in the positions corresponding to the padding. In some examples, padding is not applied to the input sequence, an attention mask is not applied, and the attention layer does not comprise the adder 194.

The output of the addition 194 is input to a Softmax function 196. This calculates the Softmax over the features among which attention is being computed. The Softmax function involves applying an exponential function to the input. As a person skilled in the art would understand, a softmax function takes as input a vector **z** of K real numbers, and normalizes it into a probability distribution consisting of K probabilities proportional to the exponentials of the input numbers. For example, the output of a softmax function, $\sigma(\mathbf{z})_i$, may be determined as $\sigma(\mathbf{z})_i = \frac{e^{z_i}}{\sum_{j=1}^{K} e^{z_j}}$ for $i$ = 1, ...,K and $\mathbf{z} = (z_1, ..., z_K) \in \mathbb{R}^K$ .

The output of the Softmax function 196 forms one input to a (batch) matrix multiplication 198. The other input to the (batch) matrix multiplication 198 is the Value matrix **(V).** Together the blocks 192, 194, 196, and 198 implement an attention function, Attention(**Q**, **K, V**), which is given by:

$$\text{Attention}(\boldsymbol{Q}, \boldsymbol{K}, \boldsymbol{V}) = \text{softmax}\left(\frac{\boldsymbol{Q}\boldsymbol{K}^T}{\sqrt{d_K}}\right)\boldsymbol{V} \qquad (1)$$

where **Q** is the Query matrix, **K$^T$** is the transpose of the Key matrix, **V** is the Value matrix, and $d_k$ is the dimensionality of the Query matrix and the Key matrix. In particular, the Query matrix and the Key matrix are $n \times d_K$ matrices, where $n$ is the number of tokens in the input sequence, and $d_k$ is the dimensionality (i.e. the number of features) of each of those tokens.

As can be appreciated from the description above, there are three main inputs to the attention mechanism: queries (Q), keys (K), and values (V). The queries and keys have a dimensionality $d_K$, and the values have a dimensionality $d_V$. In examples described herein $d_K = d_V$. A query is submitted for each token in the input sequence, and those queries are matched with a series of keys that describe values that we want to know something about. The similarity of a given query to the keys determines how much information from each value to retrieve for that particular query. The output of the first matrix multiplication, where we take the similarity of each query to each of the keys, is known as the attention matrix. The attention matrix depicts how much each token in the sequence is paying attention to each of the keys. These values are then passed through a softmax function to scale the values to a probability distribution that adds up to 1, and also sharpens the distribution so the higher values are even higher and lower values even lower. The output of the softmax function can then be multiplied with the values to determine the result of the attention function. Determining the value of the attention function in the manner described above, in accordance with equation 1 and the attention layer shown in Figure 1C, is an example of implementing "Scaled Dot-Product Attention". In practice, the attention function is computed on a set of queries simultaneously, packed together into the Query matrix (**Q**). The keys and values are also packed together into matrices (**K** and **V**).

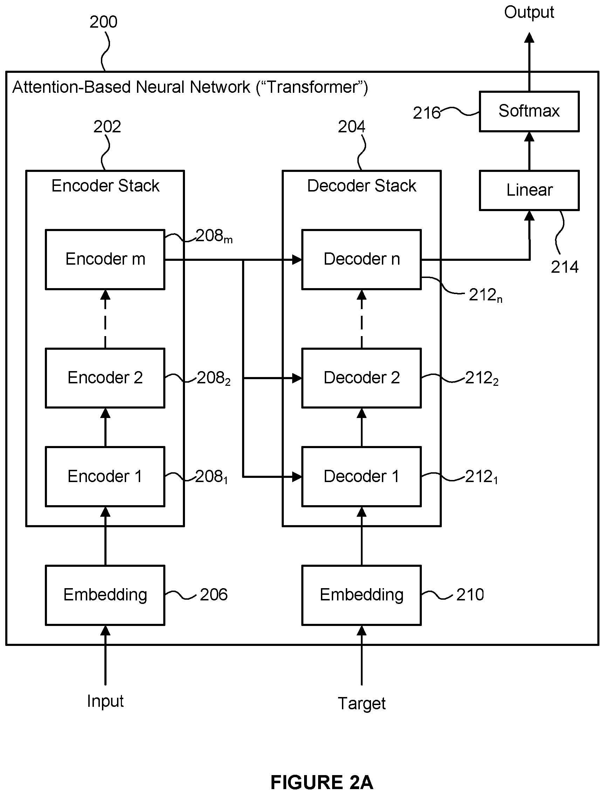

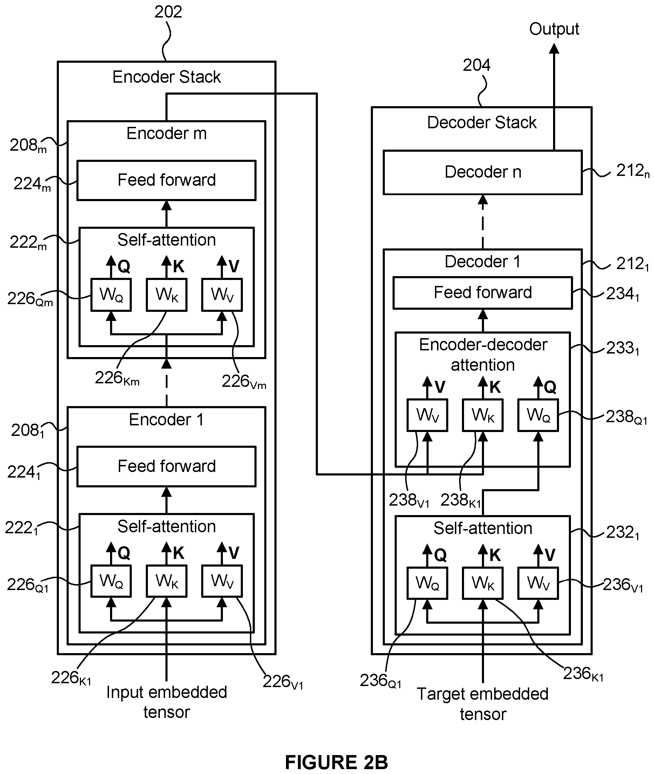

Figure 2A shows an example attention-based neural network 200. Figure 2B shows more detail of the attention-based neural network 200. The attention-based neural network 200 is a transformer network, and comprises an encoder stack 202 and a decoder stack 204. The transformer network 200 comprises a first embedding block 206 which is configured to determine an embedded tensor representing the input sequence as described above. The embedding block 206 may also take account of positional encoding (not shown in Figures 2A and 2B). The embedding block 206 is configured to provide the embedded tensor representing the input sequence (which may be referred to as the "input embedded tensor") to the encoder stack 202. The encoder stack 202 comprises m encoders 208, where m$\geq$1. Each of the encoders 208 may correspond to the encoder 100 shown in Figure 1A, and comprises a self-attention layer, a feed forward layer, and two add and normalisation layers. The encoder stack 202 is configured so that the output from each encoder 208 is provided as an input to the next encoder 208 in the encoder stack 202, until the final encoder $208_m$ is reached. The output from the final encoder $208_m$ is provided as an input to the decoder stack 204. The transformer network 200 comprises a second embedding block 210 which is configured to determine an embedded tensor representing the target sequence as described above. The embedding block 210 may also take account of positional encoding (not shown in Figures 2A and 2B). The embedding block 210 is configured to provide the embedded tensor representing the target sequence (which may be referred to as the "target embedded tensor") to the decoder stack 204. The decoder stack 204 comprises n decoders 212, where n$\geq$1. The number of encoders in the encoder stack (m) may, or may not, be equal to the number of decoders in the decoder stack (n). Each of the decoders 212 may correspond to the decoder 150 shown in Figure 1B, and comprises a self-attention layer, a cross-attention layer, a feed forward layer, and three add and normalisation layers. The decoder stack 204 is configured so that the output from each decoder 212 is provided as an input to the next decoder 212 in the decoder stack 204, until the final decoder $212_n$ is reached. As shown in Figure 2A the output from the final encoder $208_m$ in the encoder stack 202 is provided as an input to each of the decoders 212 of the decoder stack 204. The transformer 200 comprises a linear layer 214 and a softmax layer 216. The linear layer 214 is configured to perform a linear projection on the output from the final decoder $212_n$ in the decoder stack 204. The softmax layer 216 is configured to implement a softmax function on the output of the linear layer 214 to determine the output of the transformer 200. The output of the transformer 200 may, for example, be one or more translated words representing a translation of the words of the original input.

As shown in Figure 2B, the encoder $208_1$ comprises a self-attention layer $222_1$ and a feed forward layer $224_1$, the encoder $208_m$ comprises a self-attention layer $222_m$ and a feed forward layer $224_m$, and the decoder $212_1$ comprises a self-attention layer $232_1$, an encoder-decoder attention layer $233_1$ and a feed forward layer $234_1$. The self-attention layer $222_1$ in the encoder $208_1$ comprises: a block $226_{Q1}$ configured to apply a Query weight matrix to the input embedded tensor to determine the Query matrix **Q** for use in the self-attention layer $222_1$; a block $226_{K1}$ configured to apply a Key weight matrix to the input embedded tensor to determine the Key matrix **K** for use in the self-attention layer $222_1$; and a block $226_{V1}$ configured to apply a Value weight matrix to the input embedded tensor to determine the Value matrix **V** for use in the self-attention layer $222_1$. The self-attention layer $222_1$ is configured to use the **Q, K** and **V** matrices as described above to implement the attention function.

Similarly, the self-attention layer $222_m$ in the encoder $208_m$ comprises: a block $226_{Qm}$ configured to apply a Query weight matrix to an embedded tensor received from a previous encoder to determine a Query matrix **Q** for use in the self-attention layer $222_m$; a block $226_{Km}$ configured to apply a Key weight matrix to the embedded tensor received from the previous encoder to determine the Key matrix **K** for use in the self-attention layer $222_m$; and a block $226_{Vm}$ configured to apply a Value weight matrix to the embedded tensor received from the previous encoder to determine the Value matrix **V** for use in the self-attention layer $222_m$. The self-attention layer $222_m$ is configured to use the **Q, K** and **V** matrices as described above to implement the attention function.

Similarly, the self-attention layer $232_1$ in the decoder $212_1$ comprises: a block $236_{Q1}$ configured to apply a Query weight matrix to the target embedded tensor to determine the Query matrix **Q** for use in the self-attention layer $232_1$; a block $236_{K1}$ configured to apply a Key weight matrix to the target embedded tensor to determine the Key matrix **K** for use in the self-attention layer $232_1$; and a block $236_{V1}$ configured to apply a Value weight matrix to the target embedded tensor to determine the Value matrix **V** for use in the self-attention layer $232_1$. The self-attention layer $232_1$ is configured to use the **Q, K** and **V** matrices as described above to implement the attention function.

Encoder-decoder attention layers determine their Key and Value matrices differently to self-attention layers. In particular, the encoder-decoder attention layer $233_1$ in the decoder $212_1$ comprises: a block $238_{Q1}$ configured to apply a Query weight matrix to an embedded tensor received from the self-attention layer $232_1$ to determine the Query matrix **Q** for use in the encoder-decoder attention layer $233_1$; a block $238_{K1}$ configured to apply a Key weight matrix to an embedded tensor received from the final encoder $208_m$ of the encoder stack 202 to determine the Key matrix **K** for use in the encoder-decoder attention layer $233_1$; and a block $238_{V1}$ configured to apply a Value weight matrix to the embedded tensor received from the final encoder $208_m$ of the encoder stack 202 to determine the Value matrix **V** for use in the encoder-decoder attention layer $233_1$. The encoder-decoder attention layer $233_1$ is configured to use the **Q, K** and **V** matrices as described above to implement the attention function.

As mentioned above, attention layers in attention-based neural networks may be configured to implement multi-head attention. Multi-head attention allows a neural network to control the mixing of information between pieces (i.e. "tokens") of an input sequence, which can lead to the creation of richer representations, which in turn allows for increased performance on machine learning tasks. In particular, multi-head attention allows an attention layer to learn multiple ways to "index" the value matrix V. In contrast, in vanilla attention (without multiple heads) a network only learns one way to route information.

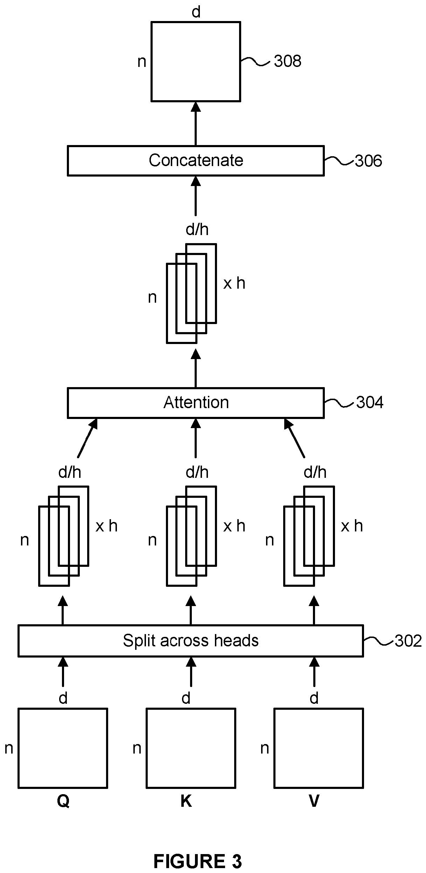

Figure 3 illustrates an attention layer configured to implement multi-head attention. In particular, the attention layer shown in Figure 3 has a splitting block 302, an attention block 304 and a concatenation block 306. The splitting block 302 may be arranged to split the Query matrix, the Key matrix and the Value matrix into a plurality of heads. For example, the splitting block 302 may linearly project the queries, keys and values h times with different, learned linear projections. In the example shown in Figure 3, each of the Query matrix **(Q),** the Key matrix **(K)** and the Value matrix (V) is an $n \times d$ matrix, and the splitting block 302 splits each of the **Q, K** and **V** matrices into h heads, where each head is an $n \times d/h$ matrix. The attention block 304 is configured to implement the attention function for each of the heads, as described above, to determine a head attention result for each of the heads. The head attention result for each of the h heads is represented as an $n \times d/h$ matrix. The concatenation block 306 is configured to concatenate the determined head attention results for the heads to determine an attention result for the attention layer, which is shown in Figure 3 as a $n \times d$ matrix 308. In this way, **Q, K** and **V** matrices are simply broken up by feature into different heads, each of which are responsible for learning a different representation. Each of the heads is passed through the attention mechanism (they are all treated the exact same way, the dimension of the matrices is just smaller). And at the end each head is concatenated back together to form the output n x d matrix 308. It is noted that the "splitting" into multiple heads, might only be a logical split. That is, the Query, Key, and Value matrices might not be physically split into separate smaller matrices, one for each Attention head. Instead, a single data matrix may be used for each of the Query, Key, and Value matrices, respectively, with logically separate sections of each of the matrices for each Attention head. Each of the attention heads can simply operate on their 'own' logical section of the matrices.

A neural network can be defined by a software model. For example, that software model may define the series of layers of the neural network (e.g. the number of layers, the order of the layers, and the connectivity between those layers), and define each of the layers in that series in terms of the operation it is configured to perform and the set of coefficients it will use. In general, a neural network may be implemented in hardware, software, or any combination thereof.

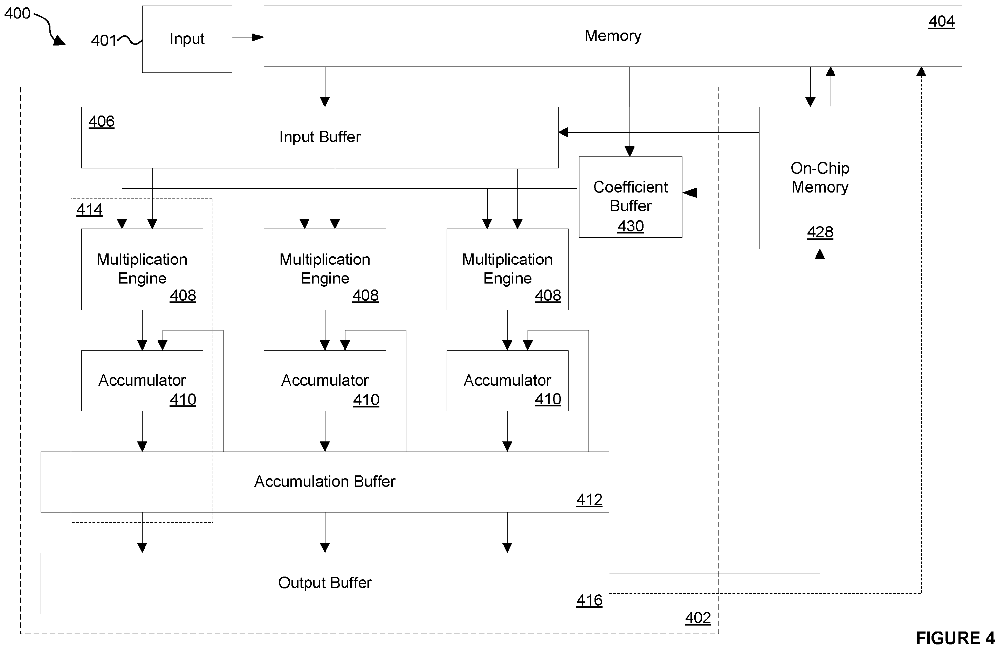

Figure 4 shows an example system 400 for implementing a neural network (e.g. an attention-based neural network) in hardware. System 400 comprises hardware components (e.g. hardware logic, such as processing elements implemented in hardware) and software components (e.g. firmware, and the procedures and tasks for execution at the hardware logic). System 400 comprises hardware logic 402 for implementing a neural network. That hardware logic may for example comprise a neural network accelerator (NNA) or a graphics processing unit (GPU). Put another way, system 400 may comprise a hardware neural network accelerator (NNA). That is, system 400 may comprise a neural network accelerator (NNA) implemented in hardware. The hardware logic 402 can be configured to execute the operations to be performed by the layers of a neural network. Hardware logic 402 comprises a plurality of configurable resources that enable different types of neural network layer to be implemented, such as attention layers, fully-connected layers and convolution layers. In other words, implementing a neural network may comprise configuring the hardware logic comprised by system 400 to process data input to that system in accordance with the layers of that neural network.

In further detail, system 400 comprises input 401 for receiving input data. The input data received at input 401 includes input activation data. The input data received at input 401 also includes the sets of coefficients of each layer of the neural network. The sets of coefficients may also be referred to as weights.

The input data received at input 401 may be written to a memory 404 comprised by system 400. Memory 404 may be accessible to the hardware logic 402. Memory 404 may be a system memory accessible to the hardware logic 402 over a data bus. The hardware logic 402 may be implemented on a chip (e.g. semiconductor die and/or integrated circuit package) and memory 404 may not be physically located on the same chip (e.g. semiconductor die and/or integrated circuit package) as the hardware logic 402. As such, memory 404 may be referred to as "off-chip memory" and/or "external memory". Memory 404 may be coupled to an input buffer 406 at the hardware logic 402 so as to provide input activation data to the hardware logic 402. Memory 404 may be coupled to a coefficient buffer 430 at the hardware logic 402 so as to provide sets of coefficients to the hardware logic 402.

Input buffer 406 may be arranged to store input activation data required by the hardware logic 402. Coefficient buffer 430 may be arranged to store sets of coefficients required by the hardware logic 402. The input buffer 406 may include some or all of the input activation data relating to the one or more operations being performed at the hardware logic 402 on a given cycle - as will be described herein. The coefficient buffer 430 may include some or all of the sets of coefficients relating to the one or more operations being processed at the hardware logic 402 on a given cycle - as will be described herein. The various buffers of the hardware logic 402 shown in Figure 4 may be implemented in any suitable manner - e.g. as any number of data stores which are local to the hardware logic 402 (e.g. on the same semiconductor die and/or provided within the same integrated circuit package) or accessible to the hardware logic 402 over a data bus or other interconnect.

In Figure 4, system 400 also comprises a memory 428 for storing at least some of the sets of coefficients and/or input activation data required by the neural network being implemented at the hardware logic 402. The hardware logic 402 (e.g. an NNA or GPU) may be implemented on a chip (e.g. semiconductor die and/or integrated circuit package) and memory 428 may be physically located on the same chip (e.g. semiconductor die and/or integrated circuit package) as the hardware logic 402. As such, memory 428 may be referred to as "on-chip memory" and/or "local memory". Data stored in the on-chip memory 428 may be accessed by the hardware logic 402 without consuming memory bandwidth to the off-chip memory 404. That said, on-chip memory 428 may not have sufficient storage space so as to simultaneously store all of the input data required to implement a neural network. Thus, subsets of the input data may be periodically written into the on-chip memory 428 from off-chip memory 404. The coefficient buffer 430 may be configured to receive sets of coefficients from the on-chip memory 428 so as to reduce the bandwidth between the off-chip memory 404 and the coefficient buffer 430. The input buffer 406 may be configured to receive input activation data from the on-chip memory 428 so as to reduce the bandwidth between the off-chip memory 404 and the input buffer 406. A neural network accelerator (NNA) is a hardware accelerator that is designed to accelerate the processing of a neural network. As is known to those of skill in the art, a hardware accelerator is hardware designed to perform a specific set of one or more functions more efficiently than a general processing unit, such as a central processing unit (CPU). Accordingly, in contrast to a general CPU which can be configured to perform any number of functions, an accelerator can only perform a limited set of one or more functions. NNAs comprise one or more hardware accelerators designed to accelerate one or more neural network operations. Therefore a graphics processing unit (GPU) with one or more hardware accelerators designed to accelerate one or more neural network operations can be understood to be an NNA.

In Figure 4, the hardware logic 402 includes input buffer 406, coefficient buffer 430, a plurality of multiplication engines 408, a plurality of accumulators 410, an accumulation buffer 412, and an output buffer 416. Each multiplication engine 408, together with its respective accumulator 410 and its share of the resources of the accumulation buffer 412, represents a processing element 414 of the hardware logic 402. Three processing elements 414 are shown in Figure 4 but in general there may be any number.

Each processing element 414 may receive a set of input activation values from input buffer 406 and a set of coefficients from a coefficient buffer 430. By operating on the sets of input activation values and the sets of coefficients, the processing elements are operable to perform the operations of the layers of a neural network. The processing elements 414 of the hardware logic 402 may be independent processing subsystems of the hardware logic 402 which can operate in parallel. Each processing element 414 includes a multiplication engine 408 configured to perform multiplications between sets of coefficients and input activation values. In examples, a multiplication engine 408 may be configured to perform a fully connected operation (e.g. when implementing a fully connected layer) or a convolution operation (e.g. when implementing a convolution layer) between sets of coefficients and input activation values. A multiplication engine 408 can perform these operations by virtue of each multiplication engine 408 comprising a plurality of multipliers, each of which is configured to multiply a coefficient and a corresponding input activation value to produce a multiplication output value. The multipliers may be, for example, followed by an adder tree arranged to calculate the sum of the multiplication outputs in the manner prescribed by the operation to be performed by that layer. In some examples, these multiply-accumulate calculations may be pipelined.

As described herein, neural networks are typically described as comprising a number of layers. A large number of multiply-accumulate calculations must typically be performed at the hardware logic 402 in order to execute the operation to be performed by each layer of a neural network. This is because the input activation data and set of coefficients of each layer are often very large. Since it may take more than one pass of a multiplication engine 408 to generate a complete output for an operation (e.g. because a multiplication engine 408 may only receive and process a portion of the set of coefficients and input activation values) the hardware logic 402 may comprise a plurality of accumulators 410. Each accumulator 410 receives the output of a multiplication engine 408 and adds that output to the previous output of the multiplication engine 408 that relates to the same operation. Depending on the implementation of the hardware logic 402, a multiplication engine 408 may not process the same operation in consecutive cycles and an accumulation buffer 412 may therefore be provided to store partially accumulated outputs for a given operation. The appropriate partial result may be provided by the accumulation buffer 412 to the accumulator 410 at each cycle.

The accumulation buffer 412 may be coupled to an output buffer 416, to allow the output buffer 416 to receive output activation data of the intermediate layers of a neural network operating at the hardware logic 402, as well as the output data of the final layer (e.g. the layer performing the final operation of a network implemented at the hardware logic 402. The output buffer 416 may be coupled to on-chip memory 428 and/or off-chip memory 404, to which the output data (e.g. output activation data to be input to a subsequent layer as input activation data, or final output data to be output by the neural network) stored in the output buffer 416 can be written.

In general, hardware logic (e.g. a neural network accelerator (NNA)) 402 may also comprise any other suitable processing logic. For instance, in some examples, the hardware logic 402 may comprise reduction logic (e.g. for implementing max-pooling or average-pooling operations), activation logic (e.g. for applying activation functions such as sigmoid functions or step functions), or any other suitable processing logic. Such units are not shown in Figure 4 for simplicity.

As described herein, the sets of coefficients used by the layers of a typical neural network often comprise large numbers of coefficients. Hardware logic 402, e.g. a neural network accelerator, can implement a layer of the neural network by reading in the input activation values and set of coefficients of that layer at run-time - e.g. either directly from off-chip memory 404, or via on-chip memory 428, as described herein with reference to Figure 4. A large amount of memory bandwidth can be required in order to read in a large set of coefficients from memory. The memory bandwidth required to read in a set of coefficients can be termed the "weight bandwidth". The memory bandwidth required to read in a set of activation values can be termed the "activation bandwidth". Further, the time taken to read a large set of coefficients in from a memory can also affect the time taken for a neural network to execute the operation to be performed by that layer. This can affect the latency of the neural network. Large sets of coefficients can also place a large computational demand on the processing elements of the neural network accelerator implementing that neural network, such as processing elements 414 of the hardware logic 402 described herein. That is, a layer having a large set of coefficients may require those processing elements to perform a large number of multiply and accumulate (MAC) operations.

The inventors have observed that, often, a large proportion of the coefficients of the sets of coefficients of the layers of a typical neural network are equal to zero (e.g. "zero coefficients" or "0s"). This is especially true in trained neural networks, as often the training process can drive a large proportion of the coefficients towards zero. In an attention layer of an attention-based neural network, these coefficients may include the elements of a Key weight matrix, the elements of a Query weight matrix and the elements of a Value weight matrix. Performing an element-wise multiplication between an input activation value and a zero coefficient will inevitably result in a zero output value - regardless of the value of the input activation value.

As such, it is undesirable to incur the weight bandwidth, latency and computational demand drawbacks incurred by the layers of a neural network using large sets of coefficients, only for a large proportion of the element-wise multiplications performed using the coefficients of those sets of coefficients to inevitably result in a zero output value. It is also undesirable to incur the activation bandwidth "cost" of reading an activation value in from memory, only for an element-wise multiplication performed using that activation value and a zero coefficient to inevitably result in a zero output value.

Described herein are methods of, and processing systems for, compressing an attention-based neural network in order to address one or more of the problems described in the preceding paragraphs.

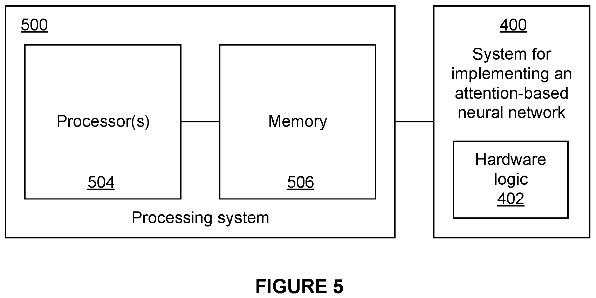

Figure 5 shows a processing system 500 for compressing an attention-based neural network in accordance with the principles described herein. Processing system 500 comprises at least one processor 504 and a memory 506.

The at least one processor 504 may be implemented in hardware, software, or any combination thereof. The at least one processor 504 may be a microprocessor, a controller or any other suitable type of processor for processing computer executable instructions. The at least one processor 504 can be configured to perform a method of compressing an attention-based neural network in accordance with the principles described herein.

Memory 506 is accessible to the at least one processor 504. Memory 506 may be a system memory accessible to the at least one processor 504 over a data bus. The at least one processor 504 may be implemented on a chip (e.g. semiconductor die and/or integrated circuit package) and memory 506 may not be physically located on the same chip (e.g. semiconductor die and/or integrated circuit package) as the at least one processor 504. As such, memory 506 may be referred to as "off-chip memory" and/or "external memory". Alternatively, the at least one processor 504 may be implemented on a chip (e.g. semiconductor die and/or integrated circuit package) and memory 506 may be physically located on the same chip (e.g. semiconductor die and/or integrated circuit package) as the at least one processor 504. As such, memory 506 may be referred to as "on-chip memory" and/or "local memory". Alternatively again, memory 506 shown in Figure 5 may represent any combination of "on-chip" and "off-chip" memories - e.g. one or more "on-chip" memories and one or more "off-chip" memories arranged in a memory hierarchy.

Memory 506 may store computer executable instructions for performing a method of compressing an attention-based neural network in accordance with the principles described herein. Memory 506 may store an attention-based neural network received at the processing system 500 for compressing (e.g. a software model defining that neural network, as described herein). Memory 506 may store a compressed neural network output as a result of the at least one processor executing the computer executable instructions stored by the memory 506. Memory 506 may store that compressed attention-based neural network for subsequent implementation (e.g. at a system for implementing a neural network).

Processing system 500 can be used to configure a system 400 for implementing an attention-based neural network. The system 400 shown in Figure 5 may have the same properties as the system 400 described with reference to Figure 4. That is, system 400 may comprise hardware logic 402 for implementing an attention-based neural network, where said hardware logic 402 may be implemented as a neural network accelerator (NNA) or a graphics processing unit (GPU). The hardware logic 402 of the system 400 may be configured to implement a compressed attention-based neural network in accordance with the principles described herein.

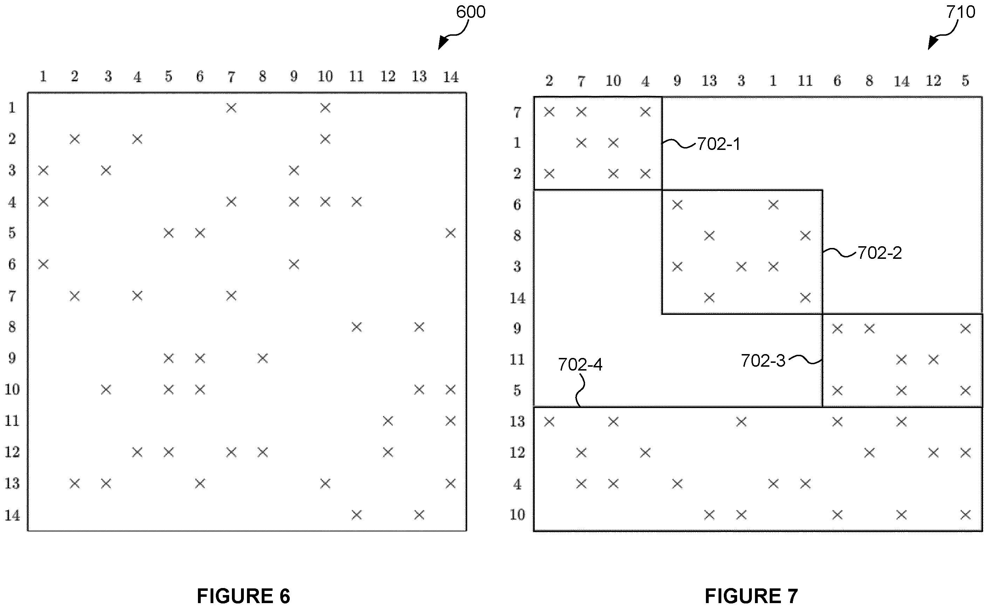

Techniques for compressing a layer of a neural network are now described with reference to Figures 6 to 11B. A matrix representative of a set of coefficients of the selected layer of the neural network is determined. The matrix comprises a plurality of elements representative of non-zero values and a plurality of elements representative of zero values. The matrix representative of the set of coefficients of the selected layer of the received neural network may not have sub-graph separation.

Figure 6 shows an example matrix 600 comprising a plurality of elements representative of non-zero values and a plurality of elements representative of zero values. In Figure 6, elements of the matrix 600 representative of non-zero values are marked with an "X", whilst elements of the matrix 600 representative of zero values are not marked. For example, the elements positioned in row 1, column 7 and row 1, column 10 of matrix 600 are representative of non-zero values, whilst the other elements positioned in row 1 of matrix 600 are representative of zero values. The example matrix 600 does not have sub-graph separation.

In a first example, the selected layer of the neural network is a fully connected layer arranged to perform a fully connected operation, or any other type of layer arranged to perform matrix multiplication. In the first example, the determined matrix 600 may comprise the set of coefficients of the layer. The plurality of elements representative of non-zero values may be a plurality of non-zero coefficients. A non-zero coefficient is any coefficient that has a value, positive or negative, that is not equal to zero. The plurality of elements representative of zero values may be a plurality of zero coefficients. A zero coefficient is a coefficient that has a value that is equal to zero. Referring to Figure 6, in the first example, the matrix 600 comprises a plurality of non-zero coefficients marked with an "X", and a plurality zero coefficients that are not marked.

In the first example, the selected layer of the received neural network may be arranged to perform a fully connected operation by performing a matrix multiplication using the matrix 600 comprising the set of coefficients of the layer and an input matrix comprising a set of input activation values of the layer. For example, as described herein, in a fully connected layer, a matrix multiplication $WX = Y$ can be performed where: $W$ is the coefficient matrix (e.g. matrix 600) comprising a set of coefficients and having dimensions $C_{out} \times C_{in}$ (i.e. $14 \times 14$ in Figure 6); $X$ is the input matrix comprising a set of input activation values and having dimensions $M \times N$, where $C_{in} = M$; and $Y$ is an output matrix comprising a set of output values and having dimensions $C_{out} \times N$. That is, the number of rows of the coefficient matrix may be representative of the number of output channels ("$C_{out}$") of that fully-connected layer and the number of columns of the coefficient matrix may be representative of the number of input channels ("$C_{in}$") of that fully-connected layer. Alternatively, in a fully connected layer, a matrix multiplication $XW = Y$ can be performed where: $X$ is the input matrix comprising a set of input activation values and having dimensions $M \times N$; $W$ is the coefficient matrix (e.g. matrix 600) comprising a set of coefficients and having dimensions $C_{in} \times C_{out}$ (i.e. $14 \times 14$ in Figure 6), where $C_{in} = N$; and $Y$ is an output matrix comprising a set of output values and having dimensions $M \times C_{out}$. That is, the number of rows of the coefficient matrix may be representative of the number of input channels ("$C_{in}$") of that fully-connected layer and the number of columns of the coefficient matrix may be representative of the number of output channels ("$C_{out}$") of that fully-connected layer.

In a second example, the selected layer of the received neural network is a convolution layer. A convolution layer comprises a set of coefficients arranged in one or more filters, each of the one or more filters arranged in one or more input channels, each input channel of each filter comprising a respective subset of the set of coefficients of the convolution layer. In the second example, the selected convolution layer of the received neural network may be arranged to perform a convolution operation by convolving a set of input activation values of the convolution layer with the set of coefficients of the convolution layer. That is, the $N^{th}$ input channel of the input activation data, having spatial dimensions $H_a \times W_a$, may be convolved with the $N^{th}$ input channel of each filter in the set of coefficients, having spatial dimensions $H_w \times W_w$.

In the second example, determining the matrix comprises, for each input channel of each filter, determining whether that input channel of that filter comprises a non-zero coefficient. In response to determining that an input channel of a filter comprises at least one non-zero coefficient, that input channel of that filter can be represented with an element representative of a non-zero value in the matrix. In response to determining that an input channel of a filter comprises exclusively zero coefficients (i.e. does not comprise any non-zero coefficients within its subset of the set of coefficients of the convolution layer), that input channel of that filter can be represented with an element representative of a zero value in the matrix. For completeness, a binary "1" could be used to represent a non-zero value in the matrix, whilst a binary "0" could be used to represent a zero value within the matrix - although this need not be the case. For example, a binary "0" could be used to represent a non-zero value in the matrix, whilst a binary "1" could be used to represent a zero value within the matrix. It is also to be understood that any other arbitrarily selected value could be used to represent a non-zero value or a zero value within the matrix. As an illustrative example, one or more bits indicative of an even number could be used to represent a non-zero value in the matrix, whilst one or more bits indicative of an odd number could be used to represent a zero value within the matrix.

Referring to Figure 6, in the second example, the matrix 600 comprises a plurality of elements representative of non-zero values marked with an "X", and a plurality of elements representative of zero values that are not marked. In the second example, matrix 600 shown in Figure 6 with 14 rows and 14 columns has been determined for a convolution layer having a set of coefficients arranged in 14 filters (e.g. output channels) (e.g. represented by the 14 rows of matrix 600), each of those 14 filters arranged in 14 input channels (e.g. represented by the 14 columns of matrix 600). For example, row 1 of matrix 600 may represent the first filter of the convolution layer, each column in row 1 representing one of the 14 input channels of that first filter. As such, the elements positioned in row 1, column 7 and row 1, column 10 of matrix 600 are representative of input channels of the first filter that comprise at least one non-zero coefficient, whilst the other elements positioned in row 1 of matrix 600 are representative of input channels of the first filter that comprise exclusively zero coefficients.

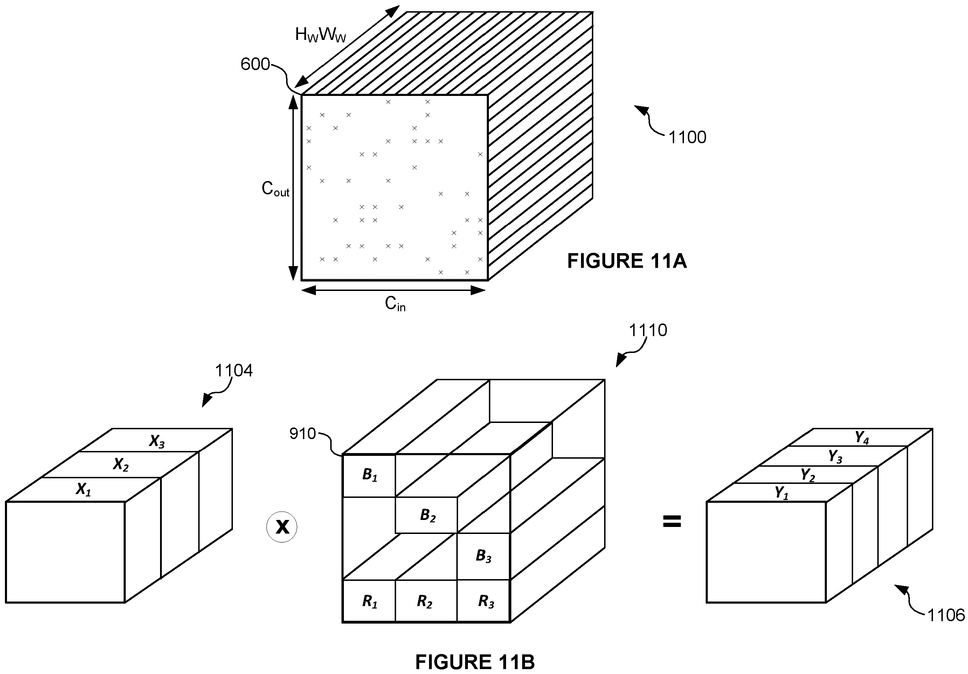

Put another way, in the second example, the matrix 600 may be representative of the $C_{out} \times C_{in}$ plane of the set of coefficients of a convolution layer having dimensions $C_{out} \times C_{in} \times H_w \times W_w$. This is illustrated in Figure 11A. In order to visualise the four-dimensional set of coefficients of a convolution layer, having dimensions $C_{out} \times C_{in} \times H_w \times W_w$, the $H_w \times W_w$ dimensions can be "flattened" - for example, by representing the coefficients of each two-dimensional input channel of each filter, having dimensions $H_w \times W_w$, as a respective one-dimensional sequence of coefficients. These one-dimensional sequences of coefficients are shown in Figure 11A, spanning one-dimension, labelled as $H_wW_w$, of a three-dimensional cuboid 1100 that represents the set of coefficients of a convolution layer. The $C_{out} \times C_{in}$ plane is shown in Figure 11A as the other two dimensions of that three-dimensional cuboid 1100. As such, each one-dimensional sequence of coefficients, $H_wW_w$, can be said to have a ($C_{in}$, $C_{out}$) co-ordinate in the $C_{out} \times C_{in}$ plane. The matrix 600, as described herein, is shown on the $C_{out} \times C_{in}$ plane of the three-dimensional cuboid 1100 shown in Figure 11A. As described herein, in the second example, each element of the matrix 600 represents one input channel of one filter of a convolution layer. An element representative of a non-zero value marked with an "X" in matrix 600 in Figure 11A represents that at least one of the coefficients in the one-dimensional sequence of coefficients $H_wW_w$ having that ($C_{in}$, $C_{out}$) co-ordinate in the $C_{out} \times C_{in}$ plane is a non-zero coefficient. An element representative of a zero value that is not marked in matrix 600 in Figure 11A represents that none of the coefficients in the one-dimensional sequence of coefficients $H_wW_w$ having that ($C_{in}$, $C_{out}$) co-ordinate in the $C_{out} \times C_{in}$ plane is a non-zero coefficient.

It is described herein that, in the second example, a matrix can be determined such that each row of the matrix is representative of one respective output channel (e.g. filter) of the convolution layer, and each column of the matrix is representative of one respective input channel of the convolution layer. It is to be understood that, alternatively, in the second example, a matrix can be determined such that each row of the matrix is representative of one respective input channel of the convolution layer, and each column of the matrix is representative of one respective output channel (e.g. filter) of the convolution layer. After defining the matrix to be populated in this way, the elements of that matrix can be populated accordingly by assessing whether the input channel of the filter represented by each element comprises a non-zero coefficient.

The rows and/or columns of the matrix 600 can be rearranged (e.g. reordered) so as to gather the plurality of elements representative of non-zero values of the matrix into one or more sub-matrices. The one or more sub-matrices have a greater number of elements representative of non-zero values per total number of elements of the one or more sub-matrices than the number of elements representative of non-zero values per total number of elements of the matrix. In other words, the "non-zero density" of the one or more sub-matrices, as a whole, is greater than the "non-zero density" of the matrix.

In some examples, each of the one or more sub-matrices may have a greater number of elements representative of non-zero values per total number of elements of that sub-matrix than the number of elements representative of non-zero values per total number of elements of the matrix. In other words, in these examples, the "non-zero density" of each and every sub-matrix of the one or more sub-matrices is greater than the "non-zero density" of the matrix - although this need not be the case.

In the first example, the one or more sub-matrices comprise a subset of the set of coefficients of the layer. In the second example, the one or more sub-matrices comprise elements representative of a subset of the input channels of the filters of the set of coefficients of the convolution layer.

Figure 7 shows an example rearranged matrix 710 comprising a plurality of sub-matrices 702-1, 702-2, 702-3, 703-4. The rearranged matrix 710 shown in Figure 7 can be formed by rearranging (e.g. reordering) the rows and columns of the matrix 600 shown in Figure 6. That is, Figure 7 shows the 14 rows and 14 columns of the matrix 600 shown in Figure 6 in a different order. For example, column 2 of matrix 600 shown in Figure 6, having elements representative of non-zero values in rows 2, 7 and 13, has been shifted "left" and is now the first column in rearranged matrix 710 shown in Figure 7. In another example, row 7 of matrix 600 shown in Figure 6, having elements representative of non-zero values in columns 2, 4 and 7, has been shifted "up" and is now the first row in rearranged matrix 710 shown in Figure 7. By rearranging the rows and columns as described herein, the plurality of elements representative of non-zero values of the matrix 600 are gathered into sub-matrices 702-1, 702-2, 702-3, 703-4.

Matrix 600 comprises 45 elements representative of non-zero values, and a total of 196 (i.e. 14x14) elements. As such, the "non-zero density" of matrix 600 is 0.23 (i.e. 45/196). Sub-matrices 702-1, 702-2, 702-3, 703-4 also comprise 45 elements representative of non-zero values, but in a total of 103 (i.e. $(3 \times 4)+(4 \times 5)+(3 \times 5)+(4 \times 14)$) elements. As such, the "non-zero density" of the plurality of sub-matrices 702-1, 702-2, 702-3, 703-4 is 0.44 (i.e. 45/103). Thus, the "non-zero density" of the plurality of sub-matrices 702-1, 702-2, 702-3, 703-4, as a whole, is greater than the "non-zero density" of the matrix 600.

The rearranged matrix 710 shown in Figure 7 is in "singly-bordered block-diagonal matrix form". This means that the rearranged matrix comprises one or more block arrays arranged on a diagonal, and a border array arranged along one side of the rearranged matrix. The one or more block arrays and the border array are non-overlapping. In Figure 7, the block arrays are labelled 702-1, 702-2 and 702-3 and are arranged on a top-left to bottom-right diagonal. In Figure 7, the border array is labelled 702-4 and is arranged along the bottom of the rearranged matrix 710. In other examples, the one or more block arrays could be arranged on a different diagonal (e.g. top-right to bottom-left), or may not be arranged on a diagonal at all. That is, for example, the columns of rearranged matrix 710 could be permuted differently such that the "horizontal" positions of two or more of the block arrays are swapped. For example, the columns of rearranged matrix 710 could be permuted differently such that the "horizontal" positions of block arrays 702-1 and 702-2 are swapped, e.g. such that block array 702-2 is the "left-most" block array. For example, more specifically, the columns of rearranged matrix 710 could alternatively be ordered: [9, 13, 3, 1, 11, 2, 7, 10, 4, 6, 8, 14, 12, 5]. In other examples, the border array may be arranged along a different side of the rearranged matrix (e.g. along the top, left or right side of the matrix), or there may be more than one border matrix where each border matrix is arranged along a different side of the rearranged matrix. A border array may be termed a horizontal array or a vertical array. A horizontal array may be horizontally arranged across the rearranged matrix. A horizontal array may span the full width of the rearranged matrix. A vertical array may be vertically arranged across the rearranged matrix. A vertical array may span the full height of the rearranged matrix. In these other examples, the rearranged matrix can be said to be in "bordered block matrix form". A matrix in singly-bordered block-diagonal matrix form can also be said to be in bordered block matrix form. As would be understood by the skilled person, a border array need not be arranged along a side of the rearranged matrix. That is, for example, a border array may be arranged between two of the block arrays. For example, the rows of rearranged matrix 710 could be permuted differently such that the "vertical" positions of the border array, and one or more of the block arrays, are swapped. For example, the rows of rearranged matrix 710 could be permuted differently such that the "vertical" positions of the border array 702-4 and the block array 702-3 are swapped. For example, more specifically, the rows of rearranged matrix 710 could alternatively be ordered: [7, 1, 2, 6, 8, 3, 14, 13, 12, 4, 10, 9, 11, 5]. To summarise, the rows and/or columns of the matrix can be rearranged so as to form a rearranged matrix comprising: one or more block arrays which are arranged along a diagonal of the rearranged matrix, and/or one or more block arrays which are not arranged along a diagonal of the rearranged matrix; and one or more horizontal arrays which are horizontally arranged across the rearranged matrix, and/or one or more vertical arrays which are vertically arranged across the rearranged matrix. The plurality of elements representative of non-zero values comprised by the matrix may be gathered into the one or more block arrays, and the one or more horizontal and/or vertical arrays, of the rearranged matrix. Put another way, the rows and/or columns of the matrix can be rearranged so as to form: a rearranged matrix that is in bordered block matrix form; or a rearranged matrix that is a block matrix comprising arrays that are permutable (e.g. able to be rearranged into) into bordered block matrix form.

As described herein, matrix 600 does not have sub-graph separation. As would be understood by the skilled person, this means that it is not possible to rearrange matrix 600 into a block-diagonal matrix form consisting of (e.g. exclusively comprising) a plurality of block arrays arranged on a diagonal into which all of the non-zero values of matrix 600 are gathered.

The rows and/or columns of the matrix can be rearranged in dependence on a hypergraph model. A hypergraph model can be used to convert the matrix into "singly-bordered block-diagonal matrix form". A hypergraph model can be formed in dependence on the respective row and column position of each of the plurality of elements representative of non-zero values within the matrix.

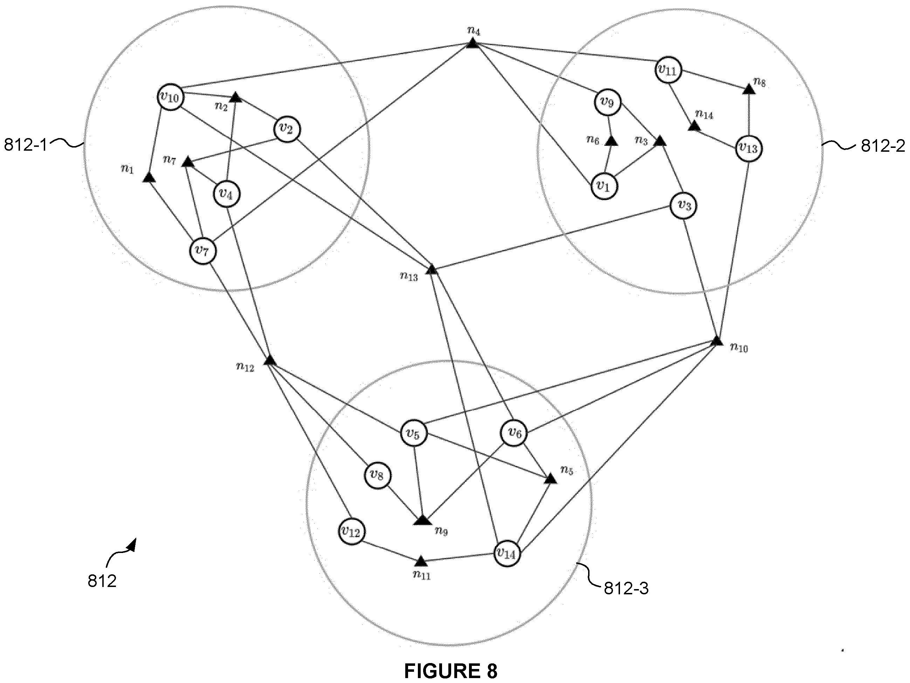

In one example, the hypergraph model is a "rownet" hypergraph model. The matrix 600 shown in Figure 6 can be rearranged to form the rearranged matrix 710 shown in Figure 7 using a rownet hypergraph model. Forming a rownet hypergraph model comprises forming a vertex representative of each column of the matrix that comprises an element representative of a non-zero value and forming a net representative of each row of the matrix that comprises an element representative of a non-zero value. For each of the plurality of elements representative of non-zero values within the matrix, the vertex representative of the column of the matrix comprising that element representative of a non-zero value is connected to the net representative of the row of the matrix comprising that element representative of a non-zero value. This example can be understood with reference to Figure 8 - which shows an example rownet hypergraph model 812 formed for the matrix 600 shown in Figure 6.

In Figure 8, a vertex representative of a column of the matrix 600 is shown as $v_i$, where $i$ is the index of that column. For example, column 10 of matrix 600 is represented by vertex $v_{10}$. A net representative of a row of the matrix 600 is shown as $n_j$, where $j$ is the index of that row. For example, row 1 of matrix 600 is represented by vertex $n_1$. As described herein, the element positioned in row 1, column 10 of matrix 600 is representative of a non-zero value. As such, by way of example, the vertex $v_{10}$ representative of column 10 of matrix 600 comprising that element representative of a non-zero value is connected to the net $n_1$ representative of row 1 of matrix 600 comprising that element representative of a non-zero value. To form the rownet hypergraph model shown in Figure 8, the same vertex-net connecting process has been repeated for each of the elements representative of a non-zero value in the matrix 600 shown in Figure 6 - as will be understood by comparing Figures 6 and 8.

Put another way, a rownet hypergraph model can be constructed for a coefficient matrix $W$ as follows. Let $H = (V, N)$ be a hypergraph $H$ with a vertex set $V$ and a net set $N$. Each column $W(:,i)$ is represented by a vertex $v_i \in V$ and each row $W(j,:)$ is represented by a net $n_j \in N$. A net $n_j$ connects a vertex $v_i$ if there is an element representative of a non-zero value $W(i,j)$ in the coefficient matrix $W$. Vertices connected by net $n_j$ can be denoted as $pins(n_j) = \{v_i \in V | \exists W(j,i) \in W(j,:)\}$.

It is to be understood that, when forming a hypergraph model (e.g. a rownet hypergraph model), a vertex may not be formed for a column of the matrix that does not comprise any elements representative of a non-zero value (none shown in the Figures), and a net may not be formed for a row of the matrix that does not comprise any elements representative of a non-zero value (none shown in the Figures).

In another example, the hypergraph model is a "columnnet" hypergraph model. Forming a columnnet hypergraph model comprises forming a net representative of each column of the matrix that comprises an element representative of a non-zero value and forming a vertex representative of each row of the matrix that comprises an element representative of a non-zero value. For each of the plurality of elements representative of non-zero values within the matrix, the net representative of the column of the matrix comprising that element representative of a non-zero value is connected to the vertex representative of the row of the matrix comprising that element representative of a non-zero value.

Put another way, a columnnet hypergraph model can be constructed for a coefficient matrix $W$ as follows. Let $H = (V,N)$ be a hypergraph $H$ with a vertex set $V$ and a net set $N$. Each row $W(j,:)$ is represented by a vertex $v_j \in V$ and each column $W(:,i)$ is represented by a net $n_i \in N$. A net $n_i$ connects a vertex $v_j$ if there is an element representative of a non-zero value $W(i,j)$ in the coefficient matrix $W$. Vertices connected by net $n_i$ can be denoted as $pins(n_i) = \{v_j \in V | \exists W(j,i) \in W(j,:)\}$.

It is to be understood that, when forming a hypergraph model (e.g. a columnnet hypergraph model), a net may not be formed for a column of the matrix that does not comprise any elements representative of a non-zero value (none shown in the Figures), and/or a vertex may not be formed for a row of the matrix that does not comprise any elements representative of a non-zero value (none shown in the Figures).

Once formed, the hypergraph model can be partitioned. Figure 8 shows a rownet hypergraph model that has been partitioned into three parts 812-1, 812-2, 812-3. It is to be understood that a hypergraph model may be partitioned into any suitable number of parts. The rows and/or columns of the matrix can be rearranged in dependence on the partitioned hypergraph model so as to gather the plurality of elements representative of non-zero values of the matrix into the one or more sub-matrices.

For example, in Figure 8, part 812-1 corresponds to block array 702-1 shown in Figure 7. The elements representative of non-zero values that are positioned in the rows of the matrix that are represented by nets that are connected only to vertices representative of columns of the matrix within part 812-1 are gathered into block array 702-1. For example, in Figure 8, nets $n_1$, $n_2$ and $n_7$ are connected only to vertices within part 812-1 - i.e. respectively, vertices $v_7$ and $v_{10}$; vertices $v_2$, $v_4$ and $v_{10}$; and vertices $v_2$, $v_4$ and $v_7$. As such, the rows and columns of the matrix 600 can be rearranged such that the elements representative of non-zero values that are positioned in rows 1, 2 and 7 are gathered into block array 702-1 - as shown in Figure 7. In an analogous way: part 812-2 corresponds to block array 702-2 shown in Figure 7; and part 812-3 corresponds to block array 702-3 shown in Figure 7.

The elements representative of non-zero values that are positioned in the rows of the matrix that are represented by nets that are connected to vertices representative of columns of the matrix within more than one part are gathered into border array 702-4. For example, in Figure 8, net $n_4$ is connected to vertices within parts 812-1 and 812-2 - i.e. vertices $v_1$, $v_7$, $v_9$, $v_{10}$ and $v_{11}$. As shown in Figure 8, nets $n_{10}$, $n_{12}$ and $n_{13}$ are also connected to vertices within more than one part. As such, the rows and columns of the matrix 600 are rearranged such that the elements representative of non-zero values that are positioned in rows 4, 10, 12 and 13 are gathered into border array 702-4 - as shown in Figure 7. The hypergraph model can be partitioned in dependence on a load balancing constraint that aims to minimise the number of nets that are connected to vertices within more than one of part - e.g. that aims to minimise the number of rows of the border array.

As would be understood by the skilled person, a hypergraph model formed for a matrix having sub-graph separation (not shown in the Figures) would not comprise any nets (or vertices) that are connected to vertices (or nets) within more than one part. That is, there would be no nets (or vertices) "connecting" any of the parts. This would enable that matrix to be converted into a block-diagonal matrix form consisting of (e.g. exclusively comprising) a plurality of block arrays arranged on a diagonal into which all of the non-zero values of that matrix are gathered.

It is to be understood that any row or column of the matrix that does not include any elements representative of a non-zero value (e.g. any row or column for which a net or vertex, as appropriate, was not formed when forming the hypergraph model) can be rearranged (e.g. arbitrarily) to any row or column position within the rearranged matrix. Alternatively, a further "empty" block array (not shown in the Figures) may be formed into which elements of the rows and columns that do not include any elements representative of a non-zero value can be gathered. Said "empty" block array may be used in an equivalent manner as the "non-empty" block arrays during the future computations performed in the compressed layer (as will be described further herein), or not used in (e.g. discarded from) the future computations performed in the compressed layer.

Put another way, a $K$-way vertex partition of a hypergraph model $H$ can be defined as $\Pi(H) = \{V_1, V_2, \cdots V_K\}$ consisting of mutually disjoint and exhaustive subsets of vertices $V_m \in V$ where $V_m \cap V_n = \emptyset$ if $m \neq n$ and $V_m \neq \emptyset$ for all $V_m \in$

$\Pi(H)$ such that $\cup_{V_m \in \Pi(H)} V_m = V$. Under a partition $\Pi(H)$, the set of parts that are connected by a net $n_j$ can be defined as the connectivity set $\Lambda(n_j)$ and the number of parts that are connected by net $n_j$ can be defined as connectivity $\lambda(n_j) = |\Lambda(n_j)|$. A net $n_j$ is said to be cut (external) if it connects to multiple parts (i.e., $\lambda(n_j) > 1$) and uncut (internal) otherwise (i.e., $\lambda(n_j) = 1$). A net $n_j$ is an internal net of a part $V_m$ if it connects only vertices in part $V_m$ (i.e., $\Lambda(n_j) = V_m$ and $pins(n_j) = V_m$). The set of internal nets of a part $V_m$ is denoted as $N_m$, and the set of external nets of a partition $\Pi(H)$ is denoted as $N_S$. Therefore, a K-way vertex partition $\Pi(H)$ can also induces a $(K+1)$-way partition $\{N_1, N_2, \cdots N_K; N_S\}$ on the net set $N$. Here, $N_S$ is a net separator whose removal gives $K$ disconnected vertex parts $V_1, V_2, \cdots V_K$ as well as $K$ disconnected net parts $N_1, N_2, \cdots N_K$.

A hypergraph model $H$ can be partitioned with the objective of minimizing the number of cut nets under the load balancing constraint $W(V_m) \leq W_{avg}(1 + \varepsilon), \forall V_m \in \Pi(H)$ where the weight of a part $V_m$ is $W(V_m) = \Sigma_{v_i \in V_m} w(v_i)$, the average part weight is $W_{avg} = \Sigma_{v_i \in V} w(v_i) / K$, and the maximum allowed imbalance ratio is $\varepsilon$. The weight of each vertex $v_i$ can be determined as $w(v_i) = 1$. The aim of the load-balancing constraint may be to produce equal-sized block arrays which can each fit in the coefficient buffer of a neural network accelerator (NNA) - e.g. coefficient buffer 430 of neural network accelerator (NNA) 402 shown in Figure 4.

The K-way partition $\Pi(H) = \{V_1, V_2, \cdots V_K\} = \{N_1, N_2, \cdots N_k; N_S\}$ can induce a partial ordering on the rows and columns of coefficient matrix $W$. In this ordering, in examples where the hypergraph model is formed as a rownet hypergraph model, the columns associated with the vertices in $V_{m+1}$ can be ordered after the columns associated with the vertices in $V_m$ for $m = 1,2, \cdots K - 1$. Similarly, the rows represented with the internal nets $N_{m+1}$ of part $V_{m+1}$ can be ordered after the rows associated with the internal nets $N_m$ of part $V_m$ for $m = 1,2, \cdots K - 1$. The rows associated with the external nets $N_S$ are ordered last as the border array. In other words, a vertex $v_i \in V_m$ means permuting column $W(:,i)$ to the mth column slice, an internal net $n_j \in N_m$ means permuting row $W(j,:)$ to the mth row slice and an external net $n_j \in N_S$ means permuting row $W(j,:)$ to border matrix.

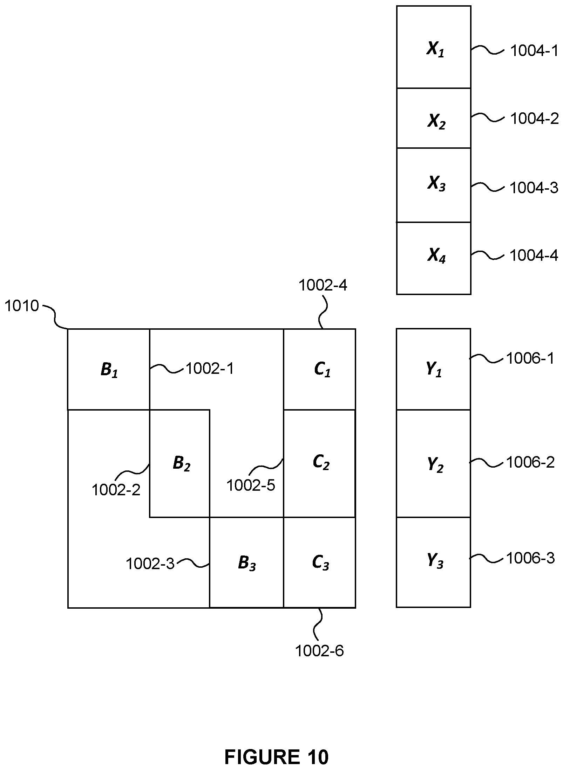

In the example described herein where the hypergraph model is formed as a rownet hypergraph model, partitioning that hypergraph model as described herein will cause the matrix to be rearranged into the singly-bordered block-diagonal form shown in Figure 7 - where the border array is arranged along the bottom of the rearranged matrix 710. In the alternative example described herein where the hypergraph model is a formed as columnnet hypergraph model, partitioning that hypergraph model as described herein will cause the matrix will be rearranged into a singly-bordered block-diagonal form where the border array is arranged along the right side of the rearranged matrix (e.g., see the example rearranged matrix 1010 shown in Figure 10).

It is to be understood that the use of a hypergraph model in step S506 is not essential. Other methods exist for rearranging the rows and/or columns of the matrix so as to gather the plurality of elements representative of non-zero values of the matrix into the one or more sub-matrices. For example, a hypergraph clustering algorithm or graph partitioning algorithm could alternatively be used for this purpose.

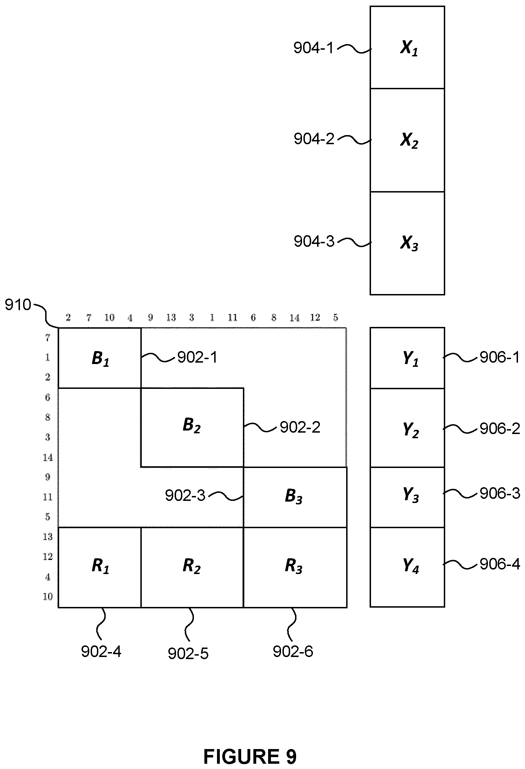

Figure 9 shows how a compressed operation can be performed using a plurality of sub-matrices. Figure 9 shows a "compressed" version of the matrix multiplication $WX = Y$. Figure 9 shows a rearranged coefficient matrix 910 comprising a plurality of sub-matrices - labelled as $B_1$ 902-1, $B_2$ 902-2, $B_3$ 902-3, $R_1$ 902-4, $R_2$ 902-5 and $R_3$ 902-6. Rearranged matrix 910 shown in Figure 9 has the same properties as rearranged matrix 710 shown in Figure 7, as described herein. As shown in Figure 9, each block array of the bordered block matrix 910 can be labelled as a sub-matrix $B$, whilst the border array of the bordered block matrix 910 can be divided into a plurality of sub-matrices $R$. The border array of the bordered block matrix 910 can be divided according to the number of columns comprised by each block array. That is: sub-matrix $R_1$ may have the same number of columns as sub-matrix $B_1$; sub-matrix $R_2$ may have the same number of columns as sub-matrix $B_2$; sub-matrix $R_3$ may have the same number of columns as sub-matrix $B_3$. In the first example, the plurality of sub-matrices $B_1, B_2, B_3, R_1, R_2, R_3$ of the compressed layer comprise a subset of the set of coefficients comprised by the coefficient matrix $W$ (e.g. matrix 600) of the selected layer.

Figure 9 also shows a plurality of input sub-matrices - labelled as $X_1$ 904-1, $X_2$ 904-2, $X_3$ 904-3. In the first example, the plurality of input sub-matrices $X_1, X_2, X_3$ of the compressed layer each comprise a respective subset of the set of input activation values comprised by the input matrix $X$ of the selected layer. In the first example, the rows of the input matrix $X$ may be rearranged (e.g. reordered or permuted) so as to correspond with the rearranged columns of the rearranged coefficient matrix. Each of the plurality of input sub-matrices $X_1, X_2, X_3$ may comprise only the input activation values of the input matrix X that are to be multiplied by the coefficients comprised by the plurality of sub-matrices $B_1, B_2, B_3, R_1, R_2, R_3$ of the compressed layer, as explained further below. The plurality of input sub-matrices $X_1, X_2, X_3$ may comprise a number of rows equal to the number of columns comprised by, respectively, the plurality of sub-matrices $B_1$ and $R_1$, $B_2$ and $R_2$, and $B_3$ and $R_3$. That is: input sub-matrix $X_1$ may have a number of rows equal to the number of columns of sub-matrices $B_1$ and $R_1$; input sub-matrix $X_2$ may have a number of rows equal to the number of columns of sub-matrices $B_2$ and $R_2$; and input sub-matrix $X_3$ may have a number of rows equal to the number of columns of sub-matrices $B_3$ and $R_3$. The rows of the input matrix $X$ may be rearranged (e.g. reordered or permuted) so as to correspond with the rearranged columns of the rearranged coefficient matrix, such that: input sub-matrix $X_1$ comprises input activation values from the rows of $X$ that correspond to (e.g. are to be multiplied with) the coefficient values of the columns of sub-matrices $B_1$ and $R_1$; input sub-matrix $X_2$ comprises input activation values from the rows of $X$ that correspond to (e.g. are to be multiplied with) the coefficient values of the columns of sub-matrices $B_2$ and $R_2$; and input sub-matrix $X_3$ comprises input activation values from the rows of $X$ that correspond to (e.g. are to be multiplied with) the coefficient values of columns of sub-matrices $B_3$ and $R_3$. In examples where each column of the rearranged coefficient matrix includes at least one element representative of a non-zero coefficient, the rows of the input matrix $X$ may be rearranged (e.g. reordered or permuted) so as to form the input sub-matrices $X_1$, $X_2$, $X_3$ without discarding any input activation values from the input matrix $X$. That is, the sum of the number of input activation values in all of the input sub-matrices $X_1$, $X_2$, $X_3$ may equal the number of input activation values in the input matrix $X$.

Figure 9 also shows a plurality of output sub-matrices - labelled as $Y_1$ 906-1, $Y_2$ 906-2, $Y_3$ 906-3, and $Y_4$ 906-4. In the first example, each of the plurality of output sub-matrices $Y_1$, $Y_2$, $Y_3$, $Y_4$ of the compressed layer comprise a respective subset of the set of output values comprised by the output matrix $Y$ of the selected layer. In the first example, when a "compressed" version of the matrix multiplication $WX = Y$ is to be performed, the plurality of output sub-matrices $Y_1$, $Y_2$, $Y_3$, $Y_4$ can be formed (e.g. a compressed fully connected operation can be performed) using the plurality of input sub-matrices $X_1$, $X_2$, $X_3$ and the plurality of sub-matrices $B_1$, $B_2$, $B_3$, $R_1$, $R_2$, $R_3$, using Equations (1) and (2) as follows:

$$Y_i = B_i X_i \text{ for } i = 1,2 \dots K \qquad\qquad (1)$$

$$Y_{K+1} = \sum_1^K R_i X_i \qquad\qquad (2)$$

It is to be understood that Equations (1) and (2) are general equations that can be used to perform a compressed fully connected operation (e.g. a "compressed" version of the matrix multiplication $WX = Y$) using the sub-matrices of any $K$-way partitioned singly-bordered block-diagonal matrix rearranged in dependence on a rownet hypergraph model. In this specific example where $K = 3$: output sub-matrix $Y_1$ can be formed by performing the matrix multiplication $Y_1 = B_1 X_1$; output sub-matrix $Y_2$ can be formed by performing the matrix multiplication $Y_2 = B_2 X_2$; output sub-matrix $Y_3$ can be formed by performing the matrix multiplication $Y_3 = B_3 X_3$; and output sub-matrix $Y_4$ can be formed by performing the matrix multiplication $Y_4 = R_1 X_1 + R_2 X_2 + R_3 X_3$.

A rownet hypergraph model, as described herein, can be used to form the rearranged matrix 910 shown in Figure 9. For completeness, Figure 10 shows a rearranged matrix 1010 that can be formed in dependence on a columnnet hypergraph model, as described herein.

Figure 10 shows another example of how a compressed operation can be performed using a plurality of sub-matrices. Figure 10 shows another "compressed" version of the matrix multiplication $WX = Y$. Figure 10 shows a rearranged coefficient matrix 1010 comprising a plurality of sub-matrices - labelled as $B_1$ 1002-1, $B_2$ 1002-2, $B_3$ 1002-3, $C_1$ 1002-4, $C_2$ 1002-5 and $C_3$ 1002-6. As shown in Figure 10, each block array of the bordered block matrix 1010 can be labelled as a sub-matrix $B$, whilst the border array of the bordered block matrix 1010 can be divided into a plurality of sub-matrices $C$. The border array of the bordered block matrix 1010 can be divided according to the number of rows comprised by each block array. That is: sub-matrix $C_1$ may have the same number of rows as sub-matrix $B_1$; sub-matrix $C_2$ may have the same number of rows as sub-matrix $B_2$; sub-matrix $C_3$ may have the same number of rows as sub-matrix $B_3$. In the first example, the plurality of sub-matrices $B_1$, $B_2$, $B_3$, $C_1$, $C_2$, $C_3$ of the compressed layer comprise a subset of the set of coefficients comprised by the coefficient matrix $W$ (e.g. matrix 600) of the selected layer.

Figure 10 also shows a plurality of input sub-matrices - labelled as $X_1$ 1004-1, $X_2$ 1004-2, $X_3$ 1004-3, and $X_4$ 1004-4. In the first example, the rows of the input matrix $X$ may be rearranged (e.g. reordered or permuted) so as to correspond with the rearranged columns of the rearranged coefficient matrix. Each of the plurality of input sub-matrices $X_1$, $X_2$, $X_3$, $X_4$ of the compressed layer comprise a respective subset of the set of input activation values comprised by the input matrix $X$ of the selected layer. In the first example, the plurality of input sub-matrices $X_1$, $X_2$, $X_3$, $X_4$ may comprise only the input activation values of the input matrix $X$ that are to be multiplied by the coefficients comprised by the plurality of sub-matrices $B_1$, $B_2$, $B_3$, $C_1$, $C_2$, $C_3$ of the compressed layer. The plurality of input sub-matrices $X_1$, $X_2$, $X_3$, $X_4$ may comprise a number of rows equal to the number of columns comprised by, respectively, the plurality of sub-matrices $B_1$, $B_2$, $B_3$, and $C_1$, $C_2$, and $C_3$. That is: input sub-matrix $X_1$ may have a number of rows equal to the number of columns of sub-matrix $B_1$; input sub-matrix $X_2$ may have a number of rows equal to the number of columns of sub-matrix $B_2$; input sub-matrix $X_3$ may have a number of rows equal to the number of columns of sub-matrix $B_3$; and input sub-matrix $X_4$ may have a number of rows equal to the number of columns of sub-matrices $C_1$, $C_2$, and $C_3$. The rows of the input matrix $X$ may be rearranged (e.g. reordered or permuted) so as to correspond with the rearranged columns of the rearranged coefficient matrix, such that: input sub-matrix $X_1$ comprises activation values from the rows of $X$ that correspond to (e.g. are to be multiplied with) the coefficient values of the columns of sub-matrix $B_1$; input sub-matrix $X_2$ comprises activation values from the rows of $X$ that correspond to (e.g. are to be multiplied with) the coefficient values of the columns of sub-matrix $B_2$; input sub-matrix $X_3$ comprises activation values from the rows of $X$ that correspond to (e.g. are to be multiplied with) the coefficient values of the columns of sub-matrix $B_3$; and input sub-matrix $X_4$ comprises activation values from the rows of $X$ that correspond to (e.g. are to be multiplied with) the coefficient values of the columns of sub-matrices $C_1$, $C_2$, and $C_3$. In examples where each column of the rearranged coefficient matrix includes at least one element representative of a non-zero coefficient, the rows of the input matrix $X$ may be rearranged (e.g. reordered or permuted) so as to form the input sub-matrices $X_1$, $X_2$, $X_3$, $X_4$ without discarding any input activation values from the input matrix $X$. That is, the sum of the number of input activation values in all of the input sub-matrices $X_1$, $X_2$, $X_3$, $X_4$ may equal the number of input activation values in the input matrix $X$.

Figure 10 also shows a plurality of output sub-matrices - labelled as $Y_1$ 1006-1, $Y_2$ 1006-2 and $Y_3$ 1006-3. In the first example, each of the plurality of output sub-matrices $Y_1$, $Y_2$, $Y_3$ of the compressed layer comprise a respective subset of the set of output values comprised by the output matrix $Y$ of the selected layer. In the first example, when a "compressed" version of the matrix multiplication $WX = Y$ is to be performed, the plurality of output sub-matrices $Y_1$, $Y_2$, $Y_3$ can be formed (e.g. a compressed fully connected operation can be performed) using the plurality of input sub-matrices $X_1$, $X_2$, $X_3$, $X_4$ and the plurality of sub-matrices $B_1$, $B_2$, $B_3$, $C_1$, $C_2$, $C_3$, using Equation (3) as follows:

$$Y_i = B_i X_i + C_i X_{K+1} \;\; \text{for } i = 1,2 \ldots K \qquad (3)$$

It is to be understood that Equation (3) is a general equation that can be used to perform a compressed fully connected operation (e.g. a "compressed" version of the matrix multiplication $WX = Y$) using the sub-matrices of any K-way partitioned singly-bordered block-diagonal matrix rearranged in dependence on a columnnet hypergraph model. In this specific example where $K = 3$: output sub-matrix $Y_1$ can be formed by performing the matrix multiplication $Y_1 = B_1 X_1 + C_1 X_4$; output sub-matrix $Y_2$ can be formed by performing the matrix multiplication $Y_2 = B_2 X_2 + C_2 X_4$; and output sub-matrix $Y_3$ can be formed by performing the matrix multiplication $Y_3 = B_3 X_3 + C_3 X_4$.

In the second example defined herein, the layer of the received neural network to be compressed is a convolution layer that is arranged to perform a convolution operation by convolving a set of input activation values of the convolution layer with the set of coefficients of the convolution layer. In the second example, each of the one or more sub-matrices comprise a plurality of elements representative of a respective subset of the input channels of the filters of the set of coefficients of the convolution layer. For example, referring back to Figures 6 and 7, matrix 600 shown in Figure 6 comprises 196 elements representative of 196 filter input channels (i.e. 14 input channels of 14 filters). By contrast, the plurality of sub-matrices 702-1, 702-2, 702-3 and 702-4 shown in Figure 7 comprise 103 elements representative of 103 filter input channels (i.e. a subset of the 14 input channels of 14 filters).

For example, Figure 11B illustrates how a compressed operation can be performed using a plurality of subsets of the set of coefficients of a convolution layer. Figure 11B illustrates a rearranged set of coefficients of a convolution layer in three-dimensions using a cuboid 1110, in accordance with the principles described herein with reference to Figure 11A. A rearranged matrix 910, having equivalent properties to rearranged matrix 710 shown in Figure 7 and rearranged matrix 910 shown in Figure 9, is shown on the $C_{out} \times C_{in}$ plane of the rearranged cuboid 1110. Each of the one-dimensional sequences of coefficients, $H_w W_w$, having a ($C_{in}$, $C_{out}$) co-ordinate in the $C_{out} \times C_{in}$ plane of rearranged cuboid 1110 is arranged (e.g. following the rearrangement of matrix 600 shown on cuboid 1100) in accordance with the row and column order of rearranged matrix 910.

As described herein, rearranged coefficient matrix 910 comprises a plurality of sub-matrices - labelled as $B_1$, $B_2$, $B_3$, $R_1$, $R_2$ and $R_3$. The plurality of sub-matrices $B_1$, $B_2$, $B_3$, $R_1$, $R_2$ and $R_3$ shown in Figure 11B have the same properties as the plurality of sub-matrices $B_1$, $B_2$, $B_3$, $R_1$, $R_2$ and $R_3$ described herein with reference to Figure 9. Each of said plurality of sub-matrices $B_1$, $B_2$, $B_3$, $R_1$, $R_2$ and $R_3$ comprises a plurality of elements representative of a respective subset of the input channels of the filters of the set of coefficients of the convolution layer.

As described herein, a set of input activation data of a convolution layer may have dimensions $C_{in} \times H_a \times W_a$. In the second example, the $C_{in}$ dimension of the input activation data of a convolution layer may be rearranged (e.g. reordered or permuted) so as to correspond with the rearranged $C_{in}$ dimension of the rearranged set of coefficients of a convolution layer. Figure 11B illustrates a rearranged set of input activation data 1104 of a convolution layer. As shown in Figure 11B, rearranged set of input activation data can be divided into a plurality of subsets of input activation data $X_1$, $X_2$, $X_3$. The plurality of subsets of input activation data $X_1$, $X_2$, $X_3$ may comprise a number of input channels ($C_{in}$) equal to the number of input channels ($C_{in}$) comprised by, respectively, the subsets of the input channels of the filters of the set of coefficients of the convolution layer represented by the elements of the plurality of sub-matrices $B_1$ and $R_1$, $B_2$ and $R_2$, and $B_3$ and $R_3$. That is: subset of input activation data $X_1$ may have a number of input channels ($C_{in}$) equal to the number of input channels ($C_{in}$) of the subset of the input channels of the filters of the set of coefficients of the convolution layer represented by the elements of sub-matrices $B_1$ and $R_1$; subset of input activation data $X_2$ may have a number of input channels ($C_{in}$) equal to the number of input channels ($C_{in}$) of the subset of the input channels of the filters of the set of coefficients of the convolution layer represented by the elements of sub-matrices $B_2$ and $R_2$; and subset of input activation data $X_3$ may have a number of input channels ($C_{in}$) equal to the number of input channels ($C_{in}$) of the subset of the input channels of the filters of the set of coefficients of the convolution layer represented by the elements of sub-matrices $B_3$ and $R_3$. The $C_{in}$ dimension of the input activation data of a convolution layer may be rearranged (e.g. reordered or permuted) so as to correspond with the rearranged $C_{in}$ dimension of the rearranged set of coefficients of a convolution layer, such that: subset of input activation data $X_1$ comprises activation values from the input channels ($C_{in}$) of the input activation data that correspond to (e.g. are to be convolved with) the subset of the input channels of the filters of the set of coefficients of the convolution layer represented by the elements of sub-matrices $B_1$ and $R_1$; subset of input activation data $X_2$ comprises activation values from the input channels ($C_{in}$) of the input activation data that correspond to (e.g. are to be convolved with) the subset of the input channels of the filters of the set of coefficients of the convolution layer represented by the elements of sub-matrices $B_2$ and $R_2$; and subset of input activation data $X_3$ comprises activation values from the input channels ($C_{in}$) of the input activation data that correspond to (e.g. are to be convolved with) the subset of the input channels of the filters of the set of coefficients of the convolution layer represented by the elements of sub-matrices $B_3$ and $R_3$. In examples where each column of the rearranged matrix includes at least one element representative of a non-zero value, the $C_{in}$ dimension of the input activation data of a convolution layer may be rearranged (e.g. reordered or permuted) so as to form the subsets of input activation data $X_1, X_2, X_3$ without discarding any input activation values from the input activation data. That is, the sum of the number of input activation values in all of the subsets of input activation data $X_1, X_2, X_3$ may equal the number of values in the input activation data.

Figure 11B also shows a plurality of subsets of output activation data 1106 - labelled as $Y_1, Y_2, Y_3$, and $Y_4$. In the second example, each of the plurality of subsets of output activation data $Y_1, Y_2, Y_3, Y_4$ of the compressed layer comprise a respective subset of the set of output values comprised by the output data of the selected layer. In the second example, the plurality of subsets of output activation data $Y_1, Y_2, Y_3, Y_4$ can be formed (e.g. a compressed convolution operation can be performed) using the plurality of subsets of input activation data $X_1, X_2, X_3$ and the plurality of subsets of the input channels of the filters of the set of coefficients of the convolution layer represented by the elements of sub-matrices $B_1, B_2, B_3, R_1, R_2, R_3$, using Equations (4) and (5) as follows:

$$Y_i = X_i \circledast B_i \text{ for } i = 1, 2 \ldots K \qquad (4)$$

$$Y_{K+1} = \sum_1^K X_i \circledast R_i \qquad (5)$$

The symbol $\circledast$ denotes convolution operation. That is, $X_i \circledast B_i$ represents convolving the subset of input activation data $X_i$ with the subset of the input channels of the filters of the set of coefficients of the convolution layer represented by the elements of sub-matrix $B_i$. It is to be understood that Equations (4) and (5) are general equations that can be used to perform a compressed convolution operation in dependence on the sub-matrices of any $K$-way partitioned singly-bordered block-diagonal matrix rearranged in dependence on a rownet hypergraph model. In this specific example where $K = 3$: subset of output activation data $Y_1$ can be formed by performing the convolution $Y_1 = B_1 \circledast X_1$; subset of output activation data $Y_2$ can be formed by performing the convolution $Y_2 = B_2 \circledast X_2$; subset of output activation data $Y_3$ can be formed by performing the convolution $Y_3 = B_3 \circledast X_3$; and subset of output activation data $Y_4$ can be formed by performing the convolutions $Y_4 = R_1 \circledast X_1 + R_2 \circledast X_2 + R_3 \circledast X_3$.

In light of the principles described herein, it will also be understood that, although not illustrated in the Figures or described in detail for conciseness, the following Equation (6) is a general equation that can be used to perform a compressed convolution operation in dependence on the sub-matrices of any $K$-way partitioned singly-bordered block-diagonal matrix rearranged in dependence on a columnnet hypergraph model:

$$Y_i = X_i \circledast B_i + X_{K+1} \circledast C_i \text{ for } i = 1, 2 \ldots K \qquad (6)$$

For example, in a specific example where $K = 3$ (e.g. as is the case for the rearranged sub-matrix 1010 shown in Figure 10, as described herein): a subset of output activation data $Y_1$ can be formed by performing the convolutions $Y_1 = B_1 \circledast X_1 + C_1 \circledast X_4$; a subset of output activation data $Y_2$ can be formed by performing the convolutions $Y_2 = B_2 \circledast X_2 + C_2 \circledast X_4$; and a subset of output activation data $Y_3$ can be formed by performing the convolutions $Y_3 = B_3 \circledast X_3 + C_3 \circledast X_4$.

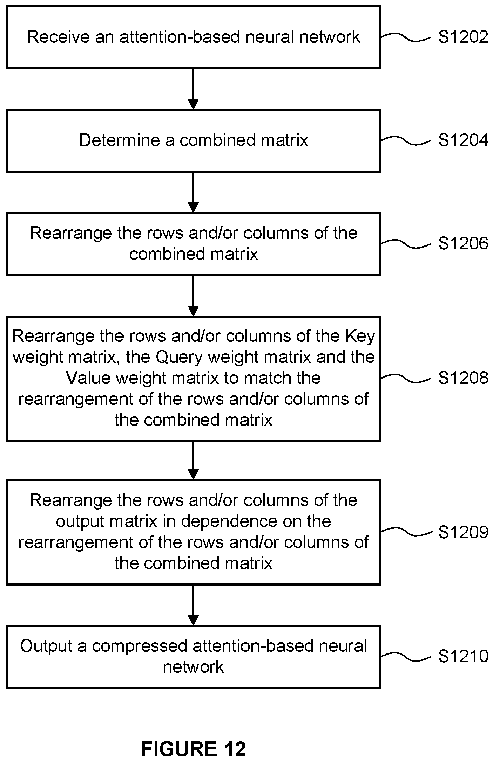

Figure 12 shows a method of compressing an attention-based neural network. The method of compressing an attention-based neural network shown in Figure 12 is a computer-implemented method. The processing system 500 shown in Figure 5 may be configured to perform the method of compressing an attention-based neural network shown in Figure 12.

In step S1202, the processor(s) 504 of the processing system 500 receives an attention-based neural network. The received attention-based neural network may comprise a transformer network. The received attention-based neural network may be as described above with references to Figures 1A to 3, and may be defined by a software model. For example, that software model may define the series of layers of the received attention-based neural network (e.g. the number of layers, the order of the layers, and the connectivity between those layers), and define each of the layers in that series in terms of the operation it is configured to perform and the set of coefficients it will use. The received attention-based neural network may be a trained neural network. That is, as would be understood by the skilled person, the received attention-based neural network may have previously been trained by iteratively: processing training data in a forward pass; assessing the accuracy of the output of that forward pass; and updating the sets of coefficients of the layers in a backward pass. As described herein, the training process can often drive a large proportion of the coefficients of the sets of coefficients used by the layers of a neural network towards zero. The attention-based neural network (e.g. the software model defining that neural network) may be received at processing system 500 shown in Figure 5, and stored in memory 506.

The attention-based neural network comprises an attention layer, e.g. a self-attention layer or an encoder-decoder attention layer as described above. As described above, the attention layer is arranged to implement an attention function in dependence on a Key matrix $(K)$, a Query matrix $(Q)$ and a Value matrix $(V)$, wherein the attention layer is configured to use a Key weight matrix $(W_K)$ to determine the Key matrix $(K)$, use a Query weight matrix $(W_Q)$ to determine the Query matrix $(Q)$, and use a Value weight matrix $(W_V)$ to determine the Value matrix $(V)$. As described above, the Key matrix, the Query matrix and the Value matrix have the same size and shape. Each of the Key matrix, the Query matrix and the Value matrix may be an $n \times d$ matrix, e.g. as shown in Figure 3.

The elements of the Key weight matrix, the Query weight matrix and the Value weight matrix are coefficients of the attention layer which can be trained. Often, many of the elements of the Key weight matrix, the Query weight matrix and the Value weight matrix are zero, i.e. have a value of zero.

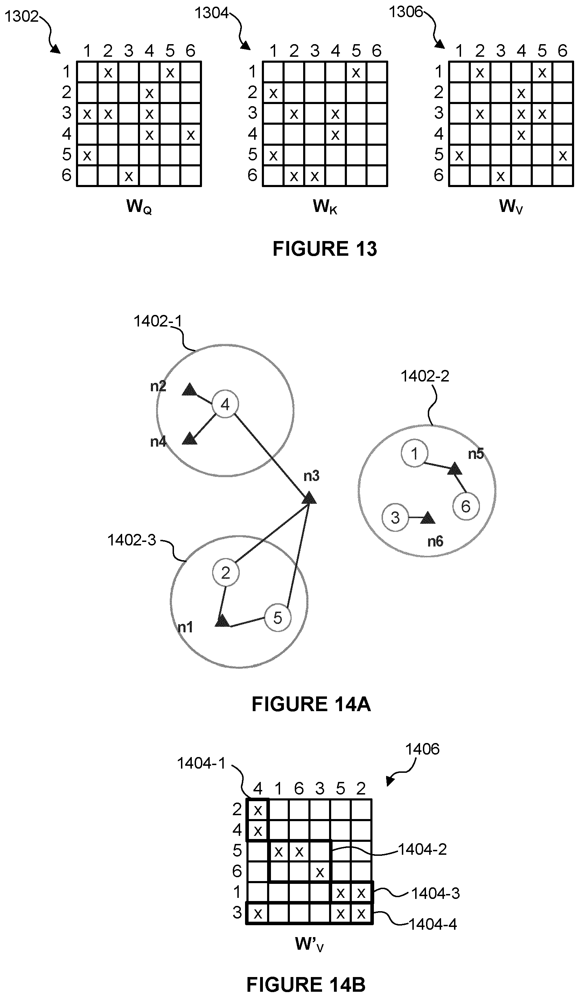

Figure 13 illustrates a Query weight matrix $(W_Q)$ 1302, a Key weight matrix $(W_K)$ 1304 and a Value weight matrix $(W_V)$ 1306 which each comprise a plurality of elements which are zero and a plurality of elements which are non-zero. In the description herein, an element "is zero" if it has a value of zero, and an element "is non-zero" if it has a value which is non-zero. Using the same notation as in Figures 6 and 7, Figure 13 denotes each of the non-zero elements (i.e. each of the elements with a non-zero value) in the Query weight matrix 1302, the Key weight matrix 1304 and the Value weight matrix 1306 with an "X", whilst the zero elements (i.e. elements with a value of zero) are not marked. For example, the elements positioned in row 1, column 2 and row 1, column 5 of the Value weight matrix 1306 are representative of non-zero values, whilst the other elements positioned in row 1 of the Value weight matrix 1306 are representative of zero values. None of the Query weight matrix 1302, the Key weight matrix 1304 and the Value weight matrix 1306 have sub-graph separation.

Figure 14A shows a hypergraph model illustrating how the Value weight matrix could be partitioned. In the example shown in Figure 14A the hypergraph model is a "rownet" hypergraph model. In accordance with the description above of rownet hypergraph models, a vertex is formed representing each column of the Value weight matrix that comprises at least one element representative of a non-zero value, and a net is formed representing each row of the Value weight matrix that comprises an element representative of a non-zero value. In Figure 14A the vertices of the hypergraph model are shown as circles and the nets of the hypergraph model are shown as triangles. For each of the non-zero elements within the Value weight matrix, the vertex representative of the column of the Value weight matrix comprising that non-zero element is connected to the net representative of the row of the Value weight matrix comprising that non-zero element. In another example, the hypergraph model may be a "columnnet" hypergraph model, as described above. To form a columnnet hypergraph model, a net is formed representing each column of a matrix that comprises a non-zero element, and a vertex is formed representing each row of the matrix that comprises a non-zero element.

Once formed, the hypergraph model can be partitioned. Figure 14A shows a rownet hypergraph model that has been partitioned into three parts 1402-1, 1402-2, 1402-3. It is to be understood that a hypergraph model may be partitioned into any suitable number of parts. The rows and/or columns of the Value weight matrix can be rearranged in dependence on the partitioned hypergraph model so as to gather the plurality of elements representative of non-zero values of the Value weight matrix into one or more sub-matrices.

For example, Figure 14B shows a rearranged Value weight matrix 1406 partitioned in accordance with the hypergraph model shown in Figure 14A. The rearranged Value weight matrix 1406 includes the same information as the Value weight matrix 1306, but the rows and columns of the matrix have been reordered and partitioned into a plurality of block arrays (1404-1, 1404-2, 1404-3) and a horizontal border array 1404-4. The block arrays and the border array are sub-matrices. Referring to Figures 14A and 14B, the part 1402-1 of the hypergraph model corresponds to block array 1404-1, the part 1402-2 of the hypergraph model corresponds to block array 1404-2, and the part 1402-3 of the hypergraph model corresponds to block array 1404-3. The net n3, which corresponds to row 3 of the Value weight matrix corresponds to the border array 1404-4. In other words, the elements representative of non-zero values that are positioned in the rows of the Value weight matrix that are represented by nets that are connected to vertices representative of columns of the Value weight matrix within more than one part are gathered into border array 1404-4.

In order to apply the Value weight matrix to the embedded tensor to determine the Value matrix, the embedded tensor may be reordered and partitioned to correspond with the reordering and partitioning of the Value weight matrix into the Value weight sub-matrices. The set of Value weight sub-matrices (1404-1, 1404-2, 1404-3, 1404-4) can be applied to the embedded sub-matrices representing the embedded tensor to thereby determine the Value matrix.

The Query weight matrix could be independently rearranged and partitioned into a set of one or more Query weight sub-matrices, and the Key weight matrix could be independently rearranged and partitioned into a set of one or more Key weight sub-matrices, to be applied to the embedded tensor to determine the Query matrix and the Key matrix.

Since the positions of the non-zero elements will (usually) be different in the Query weight matrix, the Key weight matrix and Value weight matrix, the optimal reordering and partitioning of the Query, Key and Value weight matrices will (usually) be different. If different a reordering and partitioning is applied to the Query, Key and Value weight matrices to determine the Query, Key and Value matrices, then the embedded tensor would need to be reordered and partitioned differently for determining the Query, Key and Value matrices, and before the Query, Key and Value matrices are multiplied together at least some of their rows and columns would need to be reordered so that the correct elements of the matrices correspond to each other.

However, in the examples described below, the same reordering and partitioning is applied to each of the Query weight matrix, the Key weight matrix and the Value weight matrix, to determine the Query weight sub-matrices, the Key weight sub-matrices and the Value weight sub-matrices respectively. This means that the embedded tensor only needs to be reordered and partitioned into embedded sub-matrices once. The Query weight sub-matrices, the Key weight sub-matrices and the Value weight sub-matrices can all be applied to the same embedded sub-matrices to determine the Query matrix, the Key matrix and the Value matrix respectively. Furthermore, since the determined Query matrix, the determined Key matrix and the determined Value matrix all have the same reordering of their rows and columns they can be combined (e.g. in matrix multiplications or convolutions) without needing to first reorder their rows or columns. Furthermore, the compressed attention layer may comprise a processing block (e.g. a 'linear layer') which processes the result of implementing the attention function (e.g. by applying an output matrix to the result of the attention function) before providing the output of the compressed attention layer. The rows and columns of the output matrix may be rearranged in dependence on (e.g. to be complementary to) the rearrangement of the rows and columns of each of the Query weight matrix, the Key weight matrix and the Value weight matrix. In this way the output (which may be referred to as an 'output embedded tensor') from the attention layer is not altered by the rearrangement and partitioning of the elements of the embedded tensors. For example, the order of the output channels for the Query weight matrix, the Key weight matrix and the Value weight matrix may be applied to the input channel order for the processing block which determines the output of the compressed attention layer. This means that no additional gather layers need to be added to the compressed attention layer to undo the rearrangement and partitioning of the elements of the embedded tensors. It is noted that, if the permutation of the input channels of the processing block matches (i.e. is the same as) the permutation of the output channels of the blocks for determining the Key matrix, the Query matrix and the Value matrix, then the attention layer produces the same output (e.g. the same ordering of elements within the output embedded tensor) as if no permutations were applied in the attention layer.

In step S1204 the processor(s) 504 of the processing system 500 determines a combined matrix, C. The combined matrix is the same size and shape as each of the Key weight matrix, the Query weight matrix and the Value weight matrix. For each element of the combined matrix: (i) that element of the combined matrix is determined to be zero if corresponding elements of each one of the Key weight matrix, the Query weight matrix and the Value weight matrix are zero, and (ii) that element of the combined matrix is determined to be non-zero if at least one of the corresponding elements of the Key weight matrix, the Query weight matrix and the Value weight matrix is non-zero. The "corresponding elements" are elements at the same position within the respective matrices. For example, step S1204 may involve determining an element of the combined matrix by summing the corresponding elements of the Key weight matrix, the Query weight matrix and the Value weight matrix. It is noted that all of the elements in the Key weight matrix, Query weight matrix and Value weight matrix may be represented in a floating point format, and in general may be positive, negative or zero. It is unlikely that the sum of three corresponding floating point values is precisely equal to zero unless each of those three floating point values is itself zero. In fact, this is so unlikely in the current context of summing corresponding values of the elements of the Key weight matrix, the Query weight matrix and the Value weight matrix (for which it is usual that a large proportion of their elements have a value of zero) that if the sum of corresponding elements of the Key weight matrix, the Query weight matrix and the Value weight matrix is equal to zero then it is acceptable to consider that this indicates that all of those corresponding elements of the Key weight matrix, the Query weight matrix and the Value weight matrix are zero (and, in a situation where such a consideration is not acceptable, an alternative approach to fulfilling step S1204 could be employed, such as individually testing the elements in each matrix to see if they are zero). Furthermore, if the sum of corresponding elements of the Key weight matrix, the Query weight matrix and the Value weight matrix is not equal to zero then this (definitely) indicates that at least one of those corresponding elements of the Key weight matrix, the Query weight matrix and the Value weight matrix is non-zero. In this example, the element at a position (*i,j*) in the combined matrix has a value, *C*[*i,j*], given as:

$$C(i,j) = x \text{ if } W_K(i,j) \neq 0 \text{ OR } W_Q(i,j) \neq 0 \text{ OR } W_V(i,j) \neq 0$$

$$C(i,j) = 0 \text{ if } W_K(i,j) = 0 \text{ AND } W_Q(i,j) = 0 \text{ AND } W_V(i,j) = 0$$

where *x* is any arbitrary non-zero value. In the example given above where the elements of the combined matrix are determined by summing the corresponding elements of the Key weight matrix, the Query weight matrix and the Value weight matrix, such that $C(i,j) = W_K(i,j) + W_Q(i,j) + W_V(i,j)$. In other examples, the elements of the combined matrix may be determined in a different way in step S1204 rather than summing the corresponding values of the Key weight matrix, the Query weight matrix and the Value weight matrix.

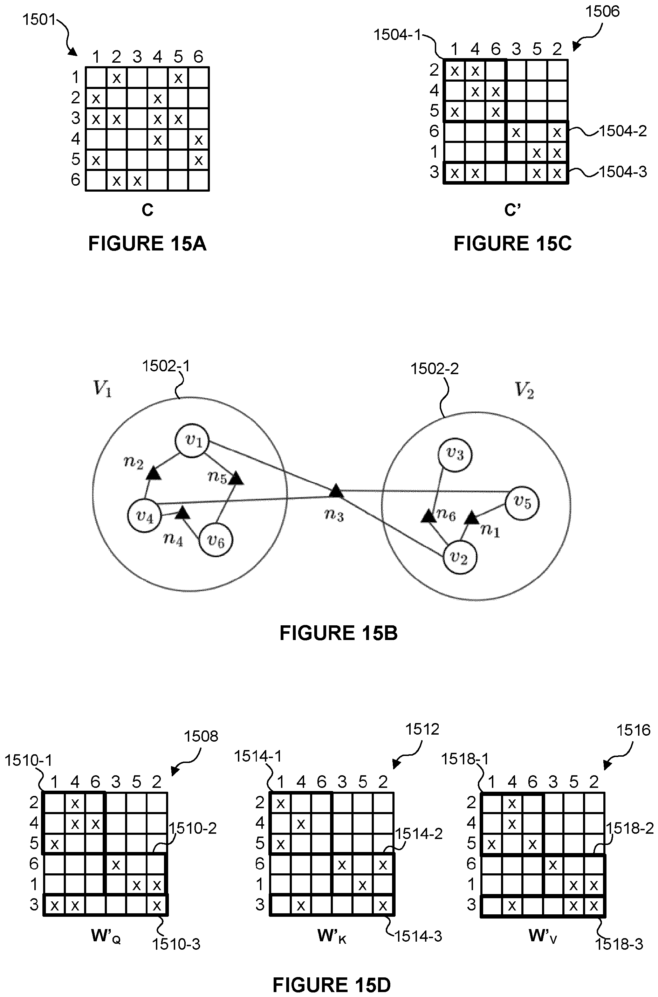

Figure 15A illustrates the combined matrix **(C)** 1501 determined in step S1204 based on the Query weight matrix 1302, the Key weight matrix 1304 and the Value weight matrix 1306 shown in Figure 13. The combined matrix **(C)** 1501 comprises a plurality of elements which are zero and a plurality of elements which are non-zero. As described above, an element "is zero" if it has a value of zero, and an element "is non-zero" if it has a value which is non-zero. Using the same notation as in Figures 6, 7 and 13, Figure 15A denotes each of the non-zero elements (i.e. each of the elements with a non-zero value) in the combined matrix 1501 with an "X", whilst the zero elements (i.e. elements with a value of zero) are not marked. For example, the elements positioned in row 1, column 2 and row 1, column 5 of the combined matrix 1501 are representative of non-zero values, whilst the other elements positioned in row 1 of the combined matrix 1501 are representative of zero values. The combined matrix 1501 does not have sub-graph separation.

In step S1206 the processor(s) 504 of the processing system 500 rearranges the rows and columns of the combined matrix so as to gather the plurality of non-zero values of the combined matrix into a set of one or more combined sub-matrices. Step S1206 may comprise performing permutations of the rows and of the columns of the combined matrix, and partitioning the rows and columns of the permuted combined matrix to determine the set of one or more combined sub-matrices. The set of one or more combined sub-matrices has a greater average density of non-zero values than the combined matrix. In some examples, the rearrangement of the rows and columns of the matrix might not actually be performed, and instead step S1206 may just involve determining a rearrangement of the rows and columns of the combined matrix that would gather the plurality of non-zero values of the combined matrix into the set of one or more combined sub-matrices (i.e. the rearrangement might not actually be applied to the combined matrix in some examples).

Figure 15B shows a hypergraph model illustrating how the combined matrix is partitioned. In the example shown in Figure 15B the hypergraph model is a "rownet" hypergraph model. In accordance with the description above of rownet hypergraph models, a vertex is formed representing each column of the combined matrix that comprises at least one element representative of a non-zero value, and a net is formed representing each row of the combined matrix that comprises an element representative of a non-zero value. In Figure 15B the vertices of the hypergraph model are shown as circles and the nets of the hypergraph model are shown as triangles. For each of the non-zero elements within the combined matrix, the vertex representative of the column of the combined matrix comprising that non-zero element is connected to the net representative of the row of the combined matrix comprising that non-zero element. In another example, the hypergraph model may be a "columnnet" hypergraph model, as described above. To form a columnnet hypergraph model, a net is formed representing each column of a matrix that comprises a non-zero element, and a vertex is formed representing each row of the matrix that comprises a non-zero element.

As described above, once formed, the hypergraph model can be partitioned (in step S1206). Figure 15B shows a rownet hypergraph model that has been partitioned into two parts 1502-1 and 1502-2. It is to be understood that a hypergraph model may be partitioned into any suitable number of parts. The rows and/or columns of the combined matrix can be rearranged in dependence on the partitioned hypergraph model so as to gather the plurality of elements representative of non-zero values of the combined matrix into one or more sub-matrices. The hypergraph model is partitioned in dependence on a load balancing constraint. In particular, a P-way partitioning of the combined matrix is determined using the hypergraph that minimizes the number of cut nets under a load-balancing constraint.

For example, Figure 15C shows a rearranged combined matrix 1506 partitioned in accordance with the hypergraph model shown in Figure 15B. The rearranged combined matrix 1506 includes the same information as the combined matrix 1501, but the rows and columns of the matrix have been reordered and partitioned into a plurality of block arrays (1504-1, 1504-2) and a horizontal border array 1504-3. The block arrays and the border array are sub-matrices. Referring to Figures 15B and 15C, the part 1502-1 of the hypergraph model corresponds to block array 1504-1 and the part 1502-2 of the hypergraph model corresponds to block array 1504-2. The net n3, which corresponds to row 3 of the combined matrix corresponds to the border array 1504-3. In other words, the elements representative of non-zero values that are positioned in the rows of the combined matrix that are represented by nets that are connected to vertices representative of columns of the combined matrix within more than one part are gathered into border array 1504-3.

In order to apply the Value weight matrix to the embedded tensor to determine the Value matrix, the embedded tensor may be reordered and partitioned to correspond with the reordering and partitioning of the Value weight matrix into the Value weight sub-matrices. The set of Value weight sub-matrices (1404-1, 1404-2, 1404-3, 1404-4) can be applied to the embedded sub-matrices representing the embedded tensor to thereby determine the Value matrix.

In step S1208 the processor(s) 504 of the processing system 500 rearranges the rows and columns of the Key weight matrix, the Query weight matrix and the Value weight matrix to match the rearrangement of the rows and columns of the combined matrix (determined in step S1206) so as to determine a set of one or more Key weight sub-matrices, a set of one or more Query weight sub-matrices and a set of one or more Value weight sub-matrices corresponding to the set of one or more combined sub-matrices. In this way, the reordering and partitioning is the same for each of: the Key weight matrix, the Query weight matrix and the Value weight matrix. Therefore, each of the set of Key weight sub-matrices, the set of Query sub-matrices and the set of Value weight sub-matrices have elements at positions matching the positions of the corresponding elements in the set of combined sub-matrices.

Figure 15D shows a rearranged Query weight matrix 1508, a rearranged Key weight matrix 1512 and a rearranged Value weight matrix 1516, which have been rearranged and partitioned in accordance with the hypergraph model shown in Figure 15B. The rearranged Query weight matrix 1508 includes the same information as the Query weight matrix 1302 shown in Figure 13, but the rows and columns of the matrix have been reordered and partitioned into a plurality of block arrays (1510-1, 1510-2) and a horizontal border array 1510-3. Similarly, the rearranged Key weight matrix 1512 includes the same information as the Key weight matrix 1304 shown in Figure 13, but the rows and columns of the matrix have been reordered and partitioned into a plurality of block arrays (1514-1, 1514-2) and a horizontal border array 1514-3. Similarly, the rearranged Value weight matrix 1516 includes the same information as the Value weight matrix 1306 shown in Figure 13, but the rows and columns of the matrix have been reordered and partitioned into a plurality of block arrays (1518-1, 1518-2) and a horizontal border array 1518-3. It can be seen that the ordering and partitioning of the rows and columns of the rearranged Query weight matrix 1508, the rearranged Key weight matrix 1512 and the rearranged Value weight matrix 1516 is the same as the ordering and partitioning of the rows and columns of the rearranged combined matrix 1506 shown in Figure 15C.

The "non-zero density" of the plurality of Query weight sub-matrices 1510-1, 1510-2, 1510-3, as a whole, is greater than the "non-zero density" of the Query weight matrix 1302. The "non-zero density" of the plurality of Key weight sub-matrices 1514-1, 1514-2, 1514-3, as a whole, is greater than the "non-zero density" of the Key weight matrix 1304. The "non-zero density" of the plurality of Value weight sub-matrices 1518-1, 1518-2, 1518-3, as a whole, is greater than the "non-zero density" of the Value weight matrix 1306.

Each of the rearranged matrices shown in Figure 15D (1508, 1512 and 1516) is in "singly-bordered block-diagonal matrix form". This means that the rearranged matrix comprises one or more block arrays arranged on a diagonal, and a border array arranged along one side of the rearranged matrix. The one or more block arrays and the border array are non-overlapping. In Figure 15D, the block arrays are arranged on a top-left to bottom-right diagonal. In Figure 15D, the border arrays are arranged along the bottom of the rearranged matrices. In other examples, the same functional benefits could be achieved although the block arrays could be arranged on a different diagonal (e.g. top-right to bottom-left), or may not be arranged on a diagonal at all. That is, for example, the columns of rearranged matrices could be permuted differently such that the "horizontal" positions of two or more of the block arrays are swapped. In other examples, the border arrays may be arranged along a different side of the rearranged matrices (e.g. along the top, left or right side of the matrices), or there may be more than one border matrix where each border matrix is arranged along a different side of the rearranged matrices. A border array may be termed a horizontal array or a vertical array. A horizonal array may be horizontally arranged across the rearranged matrix. A horizonal array may span the full width of the rearranged matrix. A vertical array may be vertically arranged across the rearranged matrix. A vertical array may span the full height of the rearranged matrix. In these other examples, the rearranged matrix can be said to be in "bordered block matrix form". A matrix in singly-bordered block-diagonal matrix form can also be said to be in bordered block matrix form. As would be understood by the skilled person, a border array need not be arranged along a side of the rearranged matrix. That is, for example, a border array may be arranged between two of the block arrays. To summarise, the rows and/or columns of the matrices can be rearranged so as to form rearranged matrices comprising: one or more block arrays which are arranged along a diagonal of the rearranged matrix, and/or one or more block arrays which are not arranged along a diagonal of the rearranged matrix; and one or more horizontal arrays which are horizontally arranged across the rearranged matrix, and/or one or more vertical arrays which are vertically arranged across the rearranged matrix. The plurality of elements representative of non-zero values comprised by the matrices may be gathered into the block arrays, and the horizontal and/or vertical arrays, of the rearranged matrices. Put another way, the rows and/or columns of the matrix can be rearranged so as to form: a rearranged matrix that is in bordered block matrix form; or a rearranged matrix that is a block matrix comprising arrays that are permutable (e.g. able to be rearranged into) into bordered block matrix form.

It can be seen that the rearranged Value weight matrix 1516 has a different ordering of rows and columns and a different partitioning to the rearranged Value weight matrix 1406 shown in Figure 14B. The partitioning of the rearranged Value weight matrix 1406 provides sub-matrices 1404-1, 1404-2, 1404-3 and 1404-4 which collectively have a greater 'non-zero density' than that provided by the partitioning of the rearranged Value weight matrix 1516 into the sub-matrices 1518-1, 1518-2 and 1518-3. This is because the rearrangement of partitioning applied to determine the rearranged Value weight matrix 1406 only considered the values of the elements in the Value weight matrix 1306. In contrast, the rearrangement of partitioning applied to determine the rearranged Value weight matrix 1516 considered the values of the elements in the Query weight matrix 1302, the Key weight matrix 1304 and the Value weight matrix 1306 (by using the combined matrix 1501). The inventors have realised that although the non-zero density of the sub-matrices of the rearranged matrices 1508, 1512 and 1516 is not as high as it could be if each of the Query weight matrix, the Key weight matrix and the Value weight matrix were rearranged and partitioned separately, there are some significant benefits to using the same rearrangement and partitioning for each of the Query weight matrix, the Key weight matrix and the Value weight matrix for use in an attention layer of an attention-based neural network. In particular, as will be seen below, the number of gather layers that need to be implemented in the attention layer will be reduced. This is because the same rearrangement and partitioning can be applied to the embedded tensor to determine a set of one or more embedded sub-matrices to which the Query weight sub-matrices, the Key weight sub-matrices and the Value weight sub-matrices can be applied to determine the Query matrix, the Key matrix and the Value matrix. Furthermore, since the same rearrangement of rows and columns is applied for determining the Query, Key and Value matrices, no further rearrangement of the rows and/or columns of the Query, Key and Value matrices needs to be applied before they can be combined with other, e.g. in a matrix multiply or convolution operations.

As described in examples below, the compressed attention layer comprises a processing block (e.g. a convolution block) configured to apply an output matrix to the result of implementing the attention function before providing an output of the compressed attention layer. In step S1209, the processor(s) 504 of the processing system 500 rearranges the rows and columns of the output matrix in dependence on (e.g. to be complementary to) the determined rearrangement of the rows and columns of the combined matrix. In this way, the compressed attention layer is configured to provide an output (which is an embedded tensor) which has elements that are in the correct order, e.g. in an order that matches the order of the elements of the embedded tensor received at the compressed attention layer. For example, the order of the elements of the output embedded tensor might not be altered by the compression of the attention layer. It is noted that in some examples the order of the elements of the output embedded tensor might not match the order of the elements of the embedded tensor received at the compressed attention layer. Furthermore, in some examples step S1209 might not be performed.

In step S1210 the processor(s) 504 of the processing system 500 outputs a compressed attention-based neural network comprising a compressed attention layer arranged to implement the attention function by performing a compressed operation in dependence on: (i) the set of one or more Key weight sub-matrices, (ii) the set of one or more Query weight sub-matrices, and (iii) the set of one or more Value weight sub-matrices. The compressed attention layer is arranged to perform the same type of operation (i.e. an attention operation) as the attention layer of the (uncompressed) neural network. That said, the compressed layer is arranged to perform that operation in dependence on the Query weight sub-matrices, the Key weight sub-matrices and the Value weight sub-matrices formed in step S1208, e.g. rather than being arranged to perform that operation in dependence on the full Query weight matrix, the full Key weight matrix and the full Value weight matrix. In other words, only the subset of the set of coefficients represented by the elements of the one or more sub-matrices formed in step S1208 may be used by the compressed attention layer. The other coefficients of the set of coefficients represented by the elements of the Query, Key and Value matrices that are not comprised by one or more sub-matrices formed in step S1208 are not used by the compressed attention layer. Said other coefficients are exclusively zero coefficients, such that an element-wise multiplication between an input activation value and any of those other coefficients would inevitably result in a zero output value. As such, no "information" is lost by the compressed attention layer not using said other coefficients. In other words, the method of compressing an attention-based neural network described herein is a lossless method of compressing an attention-based neural network.

Step S1210 may comprise storing the compressed attention-based neural network for subsequent implementation. For example, referring to Figure 5, the at least one processor 504 may write the compressed neural network into memory 506 for subsequent implementation. Step S1210 may comprise outputting a computer readable description of the compressed attention-based neural network that, when implemented at a system for implementing a neural network (e.g. system 400 shown in Figure 4), causes the compressed attention-based neural network to be executed. Step S1210 may comprise configuring a system for implementing an attention-based neural network to implement the compressed attention-based neural network.

Step S1210 may comprise configuring hardware logic to implement the compressed attention-based neural network. The hardware logic may comprise a neural network accelerator or a graphics processing unit. For example, referring to Figure 5, the at least one processor 504 may be configured to configure hardware logic 402 comprised by the system 400 for implementing a neural network to implement the compressed attention-based neural network.

Compressing the received attention-based neural network in accordance with the method described herein with reference to Figure 12 is advantageous because only a subset of the set of coefficients (i.e. only a subset of the elements of the Query weight matrix, the Key weight matrix and the Value weight matrix) of the attention layer of the received attention-based neural network are used by the compressed attention layer of the compressed attention-based neural network. That is, only the subset of the set of coefficients represented by the elements of the sub-matrices formed in step S1208 are used by the compressed attention layer. The other coefficients (i.e. the elements of the Query weight matrix, the Key weight matrix and the Value weight matrix which have a value of zero and which are not included in the Query weight sub-matrices, the Key weight sub-matrices and the Value weight sub-matrices) need not be stored in memory, e.g. off-chip memory 404. This reduces the memory footprint of the compressed attention-based neural network relative to the received attention neural network. Further, this means that fewer coefficients need to be read into the hardware logic (e.g. neural network accelerator) at run-time in order to implement the compressed attention layer, relative to the (uncompressed) attention layer. This reduces the weight bandwidth required to implement the compressed attention layer, relative to the (uncompressed) attention layer. For the same reason, the time taken to read in the set of coefficients of the compressed attention layer from memory is also reduced, relative to the (uncompressed) attention layer. This can reduce the latency of implementing the compressed attention-based neural network, relative to the (uncompressed) attention-based neural network. The smaller set of coefficients used by the compressed attention layer also reduces the computational demand on the processing elements of the hardware logic implementing the compressed attention-based neural network - by reducing the number of multiply and accumulate operations to be performed by those processing elements in order to perform the compressed operation - again, relative to the larger set of coefficients used by the (uncompressed) attention layer.

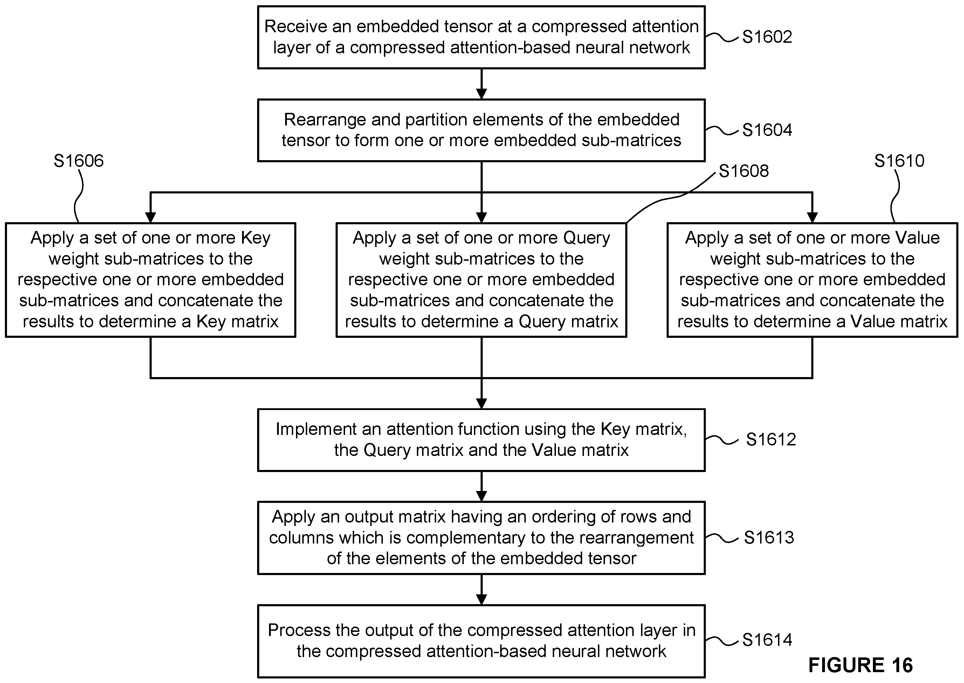

Figure 16 shows a method of implementing a compressed attention-based neural network. The compressed attention-based neural network is the result of the compression process described above with reference to the flow chart shown in Figure 12. The compressed attention-based neural network comprises a compressed attention layer arranged to implement an attention function. The method of implementing a compressed attention-based neural network shown in Figure 16 is a computer-implemented method. The processing system 400, e.g. the hardware logic 402, shown in Figures 4 and 5 may be configured to perform the method of implementing a compressed attention-based neural network shown in Figure 16. As described above, the attention-based neural network may be a transformer network.

In step S1602 the processing system 400, e.g. the hardware logic 402, receives an embedded tensor at a compressed attention layer of a compressed attention-based neural network. As described above with reference to Figures 1A to 3, the embedded tensor may represent an input sequence, an output from a previous layer of an encoder in the compressed attention-based neural network, or an output from a previous layer of a decoder in the compressed attention-based neural network. For example, the compressed attention-based neural network may be configured to: receive an input sequence (e.g. 101, 151 or 181 shown in Figures 1A, 1B and 1C), determine an embedded tensor representing the input sequence, and provide the embedded tensor to the compressed attention layer.

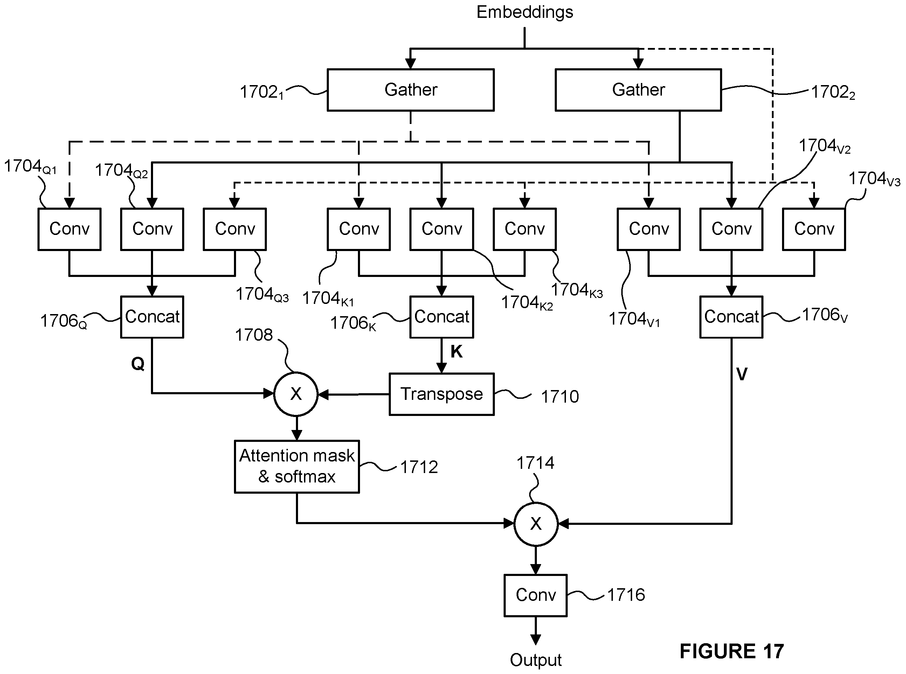

Figure 17 shows a first example of a compressed attention layer of a compressed attention-based neural network. The compressed attention-based neural network is configured to provide the same functionality as an (uncompressed) attention-based neural network. In particular, the compressed attention layer of the compressed attention-based neural network is configured to provide the same functionality (i.e. the same outputs) as an (uncompressed) attention layer of the (uncompressed) attention-based neural network. As described above, the (uncompressed) attention layer is configured to receive one or more embedded tensors (denoted "embeddings" in Figure 17), determine the Key matrix by applying the Key weight matrix to one of the one or more received embedded tensors, determine the Query matrix by applying the Query weight matrix to one of the one or more received embedded tensors, and determine the Value matrix by applying the Value weight matrix to one of the one or more received embedded tensors. In contrast, the compressed attention layer of the compressed attention-based neural network is configured to receive one or more embedded tensors, rearrange and partition the elements of the embedded tensor into a set of one or more embedded sub-matrices, determine the Key matrix by applying a set of one or more Key weight sub-matrices to the one or more embedded sub-matrices, determine the Query matrix by applying a set of one or more Query weight sub-matrices to the one or more embedded sub-matrices, and determine the Value matrix by applying a set of one or more Value weight sub-matrices to the one or more embedded sub-matrices.

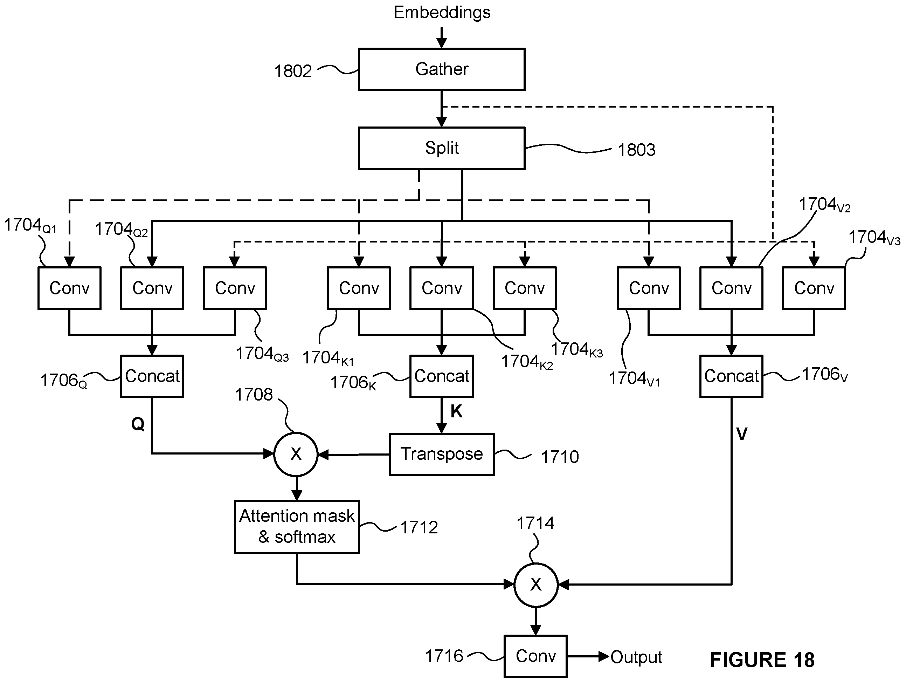

In particular, in step S1604 the processing system 400, e.g. the hardware logic 402, rearranges and partitions elements of the embedded tensor to form one or more embedded sub-matrices. The one or more embedded sub-matrices are determined by rearranging and partitioning the elements of the embedded tensor to match the rearrangement and partitioning of the rows and columns of the Query matrix, Key matrix and Value matrix as described above during the compression of the compressed attention layer Step S1604 is performed by: (i) one or more gather layers of the compressed attention layer (as shown in the example of Figure 17), or (ii) a gather layer and a splitting layer of the compressed attention layer (as shown in the example of Figure 18 described below). In accordance with the example shown in Figure 17, the compressed attention layer comprises one or more gather layers configured to rearrange and partition the elements of the embedded tensor to form the one or more embedded sub-matrices. In particular, Figure 17 shows the compressed attention layer comprising two gather layers $1702_1$ and $1702_2$ which are each configured to receive the embedded tensor and output a respective one of the embedded sub-matrices. In this example, each of the Query weight matrix, the Key weight matrix and the Value weight matrix is partitioned into three sub-matrices (i.e. two block arrays and one border array), e.g. as shown in the example of Figure 15D. The embedded tensor is partitioned into two embedded sub-matrices. In general, the embedded tensor is partitioned into a number of embedded sub-matrices which is one less than the number of sub-matrices that the Query weight matrix, the Key weight matrix and the Value weight matrix are each partitioned into.

The compressed attention layer shown in Figure 17 also comprises nine convolution blocks 1704. Three of the convolution blocks ($1704_{Q1}$, $1704_{Q2}$ and $1704_{Q3}$) are configured for use in determining the Query matrix, **Q.** Three of the convolution blocks ($1704_{K1}$, $1704_{K2}$ and $1704_{K3}$) are configured for use in determining the Key matrix, **K.** Three of the convolution blocks ($1704_{V1}$, $1704_{V2}$ and $1704_{V3}$) are configured for use in determining the Value matrix, **V.** The convolution blocks are configured to implement matrix multiplications as convolution operations. In other examples the matrix multiplications may be implemented using matrix multiplication ("matmul") blocks rather than convolution blocks. The inventors found that implementing the matrix multiplication operations using convolution blocks is, in some systems, more efficient than implementing the matrix multiplication operations using matrix multiplication blocks. It is noted that a matrix multiplication operation can be thought of as a specific example of a convolution operation.

The first gather layer $1702_1$ determines the first embedded sub-matrix from the embedded tensor. The first gather layer $1702_1$ provides the first embedded sub-matrix to the three convolution blocks $1704_{Q1}$, $1704_{K1}$, and $1704_{V1}$, as shown by the dashed line (with long dashes) in Figure 17. The second gather layer $1702_2$ determines the second embedded sub-matrix from the embedded tensor. The second gather layer $1702_2$ provides the second embedded sub-matrix to the three convolution blocks $1704_{Q2}$, $1704_{K2}$, and $1704_{V2}$, as shown by the solid line in Figure 17. The embedded tensor is provided to the three convolution blocks $1704_{Q3}$, $1704_{K3}$, and $1704_{V3}$, as shown by the dashed line (with short dashes) in Figure 17.

Steps S1606, S1608 and S1610 can be performed in any order, in sequence or in parallel. In step S1606, the convolution blocks $1704_{K1}$, $1704_{K2}$ and $1704_{K3}$ apply the set of Key weight sub-matrices to the one or more embedded sub-matrices. In particular, the convolution block $1704_{K1}$ applies the first Key weight sub-matrix 1514-1 to the first embedded sub-matrix to determine a first partial Key result, the convolution block $1704_{K2}$ applies the second Key weight sub-matrix 1514-2 to the second embedded sub-matrix to determine a second partial Key result, and the convolution block $1704_{K3}$ applies the third Key weight sub-matrix 1514-3 to the (full) embedded tensor to determine a third partial Key result. The first, second and third partial Key results are provided to a Key concatenation layer $1706_K$. The Key concatenation layer $1706_K$ concatenates the first, second and third partial Key results to determine the Key matrix, **K.**

In step S1608, the convolution blocks $1704_{Q1}$, $1704_{Q2}$ and $1704_{Q3}$ apply the set of Query weight sub-matrices to the one or more embedded sub-matrices. In particular, the convolution block $1704_{Q1}$ applies the first Query weight sub-matrix 1510-1 to the first embedded sub-matrix to determine a first partial Query result, the convolution block $1704_{Q2}$ applies the second Query weight sub-matrix 1510-2 to the second embedded sub-matrix to determine a second partial Query result, and the convolution block $1704_{Q3}$ applies the third Query weight sub-matrix 1510-3 to the (full) embedded tensor to determine a third partial Query result. The first, second and third partial Query results are provided to a Query concatenation layer $1706_Q$. The Query concatenation layer $1706_Q$ concatenates the first, second and third partial Query results to determine the Query matrix, **Q.**

In step S1610, the convolution blocks $1704_{V1}$, $1704_{V2}$ and $1704_{V3}$ apply the set of Value weight sub-matrices to the one or more embedded sub-matrices. In particular, the convolution block $1704_{V1}$ applies the first Value weight sub-matrix 1518-1 to the first embedded sub-matrix to determine a first partial Value result, the convolution block $1704_{V2}$ applies the second Value weight sub-matrix 1518-2 to the second embedded sub-matrix to determine a second partial Value result, and the convolution block $1704_{V3}$ applies the third Value weight sub-matrix 1518-3 to the (full) embedded tensor to determine a third partial Value result. The first, second and third partial Value results are provided to a Value concatenation layer $1706_V$. The Value concatenation layer $1706_V$ concatenates the first, second and third partial Value results to determine the Value matrix, **V.**

When the Query matrix, Q, Key matrix, K, and Value matrix, V, have been determined, the method of implementing attention can proceed as described above in relation to the attention layers described with respect to Figures 1A to 3. In particular, in step S1612, the processing system 400, e.g. the hardware logic 402, implements the attention function using the determined Key matrix, the determined Query matrix and the determined Value matrix. As described above, step S1612 may comprise using a scaled-dot product attention calculation, e.g. as described above in relation to Figure 1C. For example, as described above, the attention function, Attention(*Q,K,V*), may be given by:

$$\text{Attention}(Q, K, V) = \text{softmax}\left(\frac{QK^T}{\sqrt{d_k}}\right)V$$

where *Q* is the Query matrix, $K^T$ is the transpose of the Key matrix, *V* is the Value matrix, and $d_k$ is the dimensionality of the Query matrix and the Key matrix. In order to implement this attention function, the compressed attention layer shown in Figure 17 comprises: a transpose block 1710 configured to determine the transpose of the Key matrix; a first multiplication block 1708 configured to determine the dot product between (i.e. to multiply) the Query matrix, **Q,** and the transpose of the Key matrix, **K$^T$**; an attention and softmax block 1712 configured to divide the output of the first multiplication block 1708 by $\sqrt{d_k}$, apply an attention mask, and apply the softmax function; and a second multiplication block 1714 configured to multiply the output of the attention and softmax block 1712 with the Value matrix, **V.**

The compressed attention layer shown in Figure 17 also comprises a processing block 1716 which is configured to apply an output matrix to the result of implementing the attention function before an output of the compressed attention layer is provided. In the example shown in Figure 17, the processing block is a convolution block, but in other examples the processing block could be a different type of processing block, such as a matrix multiplication block. In step S1613, the final convolution block 1716 applies the output matrix (e.g. as a convolution) to the output of the second multiplication block 1714 to reorder the channels and to determine an output (i.e. an "attention result") of the compressed attention layer. The ordering of the rows and columns of the output matrix is complementary to the rearrangement of the elements of the embedded tensor that was performed in step S1604. In other words, the rows and columns of the output matrix may be ordered in dependence on (e.g. to be complementary to) the ordering of the rows and columns of each of the Query weight matrix, the Key weight matrix and the Value weight matrix. In some examples, the reordering of the channels applied by the convolution block 1716 reverses the reordering of the channels applied by the gather layers $1702_1$ and $1702_2$ for determining the output from the compressed attention layer. For example, the input channel order for the convolution block 1716 may be complementary to the rearrangement of the elements of the embedded tensor (performed in step S1604). In this way, the ordering of the elements of the output embedded tensor (i.e. the output to the compressed attention layer) may match the ordering of the elements of the embedded tensor received at the compressed attention layer. For example, the order of the output channels for the Query weight matrix, the Key weight matrix and the Value weight matrix may be applied to the input channel order for the processing block 1716 which determines the output of the compressed attention layer; and the compressed attention layer produces the same output (i.e. the same output embedded tensor, with the same ordering of elements) as the original (uncompressed) attention layer would have produced. It is noted that no additional gather layers need to be added to the compressed attention layer to 'undo' the rearrangement and partitioning of the elements of the embedded tensors. It is also noted that, if the permutation of the input channels of the processing block matches (i.e. is the same as) the permutation of the output channels of the blocks for determining the Key matrix, the Query matrix and the Value matrix, then the compressed attention layer produces the same output as if no permutations were applied in the compressed attention layer.

In other examples, in which the compressed attention layer is followed by another layer (referred to as the "next layer") for which the input embedded tensor is to be rearranged and partitioned, the ordering of the rows and columns of the output matrix applied by the convolution block 1716 could be such that the ordering of the elements in the output embedded tensor matches the desired ordering of the elements in the embedded tensor received by the next layer, such that the next layer does not need to include a gather layer for rearranging the elements of its received embedded tensor (although it may still have a splitting layer to partition its received embedded tensor into embedded sub-matrices).

It is also noted that in some examples step S1613 might not be performed.

The compressed attention layer may be configured to implement multi-head attention, as described above. In particular, the compressed attention layer may be configured to implement multi-head attention by: splitting the Key matrix, Query matrix and Value matrix into a plurality of heads; determining a head attention result for each of the heads; and concatenating the determined head attention results for each of the heads to determine an attention result for the compressed attention layer.

In step S1614 the processing system 400, e.g. the hardware logic 402, processes the output of the compressed attention layer in the compressed attention-based neural network.

As described above, the compressed attention-based neural network may be a transformer network. As described above, the compressed attention-based neural network may comprise a stack of encoders and a stack of decoders. For example, the compressed attention-based neural network may be a large language model (LLM). To give some examples, the compressed attention-based neural network may be implemented to perform one of: natural language processing, language translation, computer vision processing, image processing, text processing and speech processing.

For example, the compressed attention layer may be a self-attention layer within an encoder of the compressed attention-based neural network. As another example, the compressed attention layer may be a self-attention layer within a decoder of the compressed attention-based neural network. As another example, the compressed attention layer may be an encoder-decoder attention layer within a decoder of the compressed attention-based neural network. As described above with reference to Figures 1A to 3, the encoder and/or the decoder may comprise a feed-forward layer and/or a normalisation layer.

As described above with reference to Figure 2B, when the compressed attention layer is an encoder-decoder attention layer within a decoder of the compressed attention-based neural network, the Key matrix and the Value matrix are determined using a first embedded tensor representing an output from an encoder layer in the compressed attention-based neural network, whilst the Query matrix is determined using a second embedded tensor representing an output from a previous layer in the decoder.

Figure 18 shows a second example of a compressed attention layer of an attention-based neural network. The compressed attention layer shown in Figure 18 is the same as that shown in Figure 17 except the two gather layers $1702_1$ and $1702_2$ in the example shown in Figure 17 are replaced with a gather layer 1802 and a splitting layer 1803 in the example shown in Figure 18. In this way, the compressed attention layer shown in Figure 18 comprises: a gather layer 1802 configured to rearrange the elements of the embedded tensor, and a splitting layer 1803 configured to partition the output from the gather layer 1802 to form the one or more embedded sub-matrices.

In this example, in step S1604 the splitting layer 1803 determines the first embedded sub-matrix and provides it to the three convolution blocks $1704_{Q1}$, $1704_{K1}$, and $1704_{V1}$, as shown by the dashed line (with long dashes) in Figure 18.

The splitting layer 1803 also determines the second embedded sub-matrix and provides it to the three convolution blocks $1704_{Q2}$, $1704_{K2}$, and $1704_{V2}$, as shown by the solid line in Figure 18. The output from the gather layer 1802 is provided to the three convolution blocks $1704_{Q3}$, $1704_{K3}$, and $1704_{V3}$, as shown by the dashed line (with short dashes) in Figure 18. It is noted that in the example shown in Figure 17, the channel order of the received embedded tensor is used to determine the input channel order of the convolution layer that corresponds to the border block (i.e. the block corresponding to convolution blocks $1704_{Q3}$, $1704_{K3}$, and $1704_{V3}$). As such, in the example shown in Figure 17, a gather layer is not used ahead of the border block convolutions. After obtaining the singly-bordered form, the columns of the border block can be rearranged in any order we want, separate from the diagonal blocks. The multiple parts of the border block in the singly-bordered form can also be combined as one entity. In contrast, in the example shown in Figure 18, the channels of the received embedded tensor are reordered using the single gather layer 1802. In this example, the column order of the border block is the same as the column order of the singly-bordered form of the matrix.

The rest of the method (i.e. steps S1606 to S1614) is performed as described above.

It can be seen that in the examples shown in Figures 17 and 18, either two gather layers ($1702_1$ and $1702_2$) or a gather layer and a splitting layer (1802 and 1803) are implemented to rearrange and partition the elements of the embedded tensor to form the one or more embedded sub-matrices in step S1604, and these same embedded sub-matrices are used to determine each of the Query matrix, Key matrix and Value matrix. This is possible because the Query weight matrix, the Key weight matrix and the Value weight matrix are rearranged and partitioned in the same way. If the Query weight matrix, Key weight matrix and Value weight matrix were not rearranged and partitioned in the same way then the embedded tensor would need to be rearranged and partitioned differently for determining the Query, Key and Value matrices, and as such a greater number of gather layers and/or splitting layers would be needed in the compressed attention layer. Furthermore, since the Key matrix, Query matrix and Value matrix have all been reordered in the same way, they can be directly applied to each other (e.g. in the multiplication blocks 1708 and 1716) without needing to implement any gather layers or splitting layers after the concatenation layers 1706. As such, the approach described herein of rearranging and partitioning the Query weight matrix, the Key weight matrix and the Value weight matrix in the same way allows for a reduction in the number of gather layers and/or splitting layers that need to be implemented in the compressed attention layer. This leads to technical benefits in the attention-based neural network, such as reduced latency and power consumption of implementing the attention-based neural network. The identical ordering of input and output channels of the projection matrices ensures the correct attention scores, and the number of gather layers is minimised by using the same reordering for each of **K, Q** and **V.**

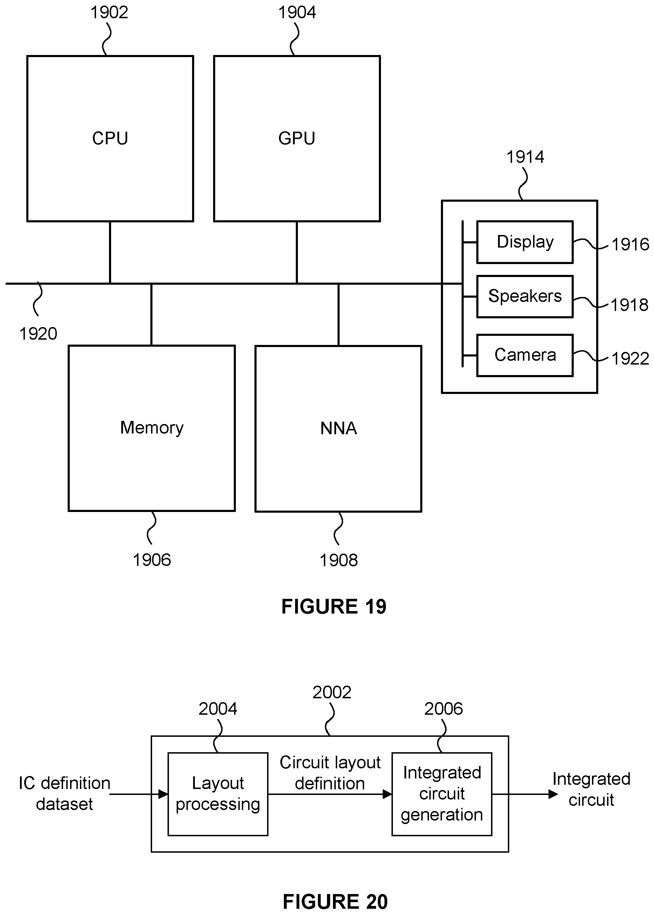

Figure 19 shows a computer system in which the neural network systems described herein may be implemented. The computer system comprises a CPU 1902, a GPU 1904, a memory 1906 (e.g. equivalent to memory 404 shown in Figure 4), a neural network accelerator (NNA) 1908 and other devices 1914, such as a display 1916, speakers 1918 and a camera 1922 (e.g. equivalent to input 401 shown in Figure 4). The hardware logic 402 shown in Figure 4 may be implemented using the GPU 1904 or the NNA 1908. In some examples, the camera 1922 may input activation data directly into the neural network accelerator (NNA) 1908. In some examples, the NNA may be a GPU with one or more hardware accelerators for accelerating one or more neural network operations. It is to be understood that one or more of the depicted components may be omitted from the system. The components of the computer system can communicate with each other via a communications bus 1920.

The systems described herein are shown in the figures as comprising a number of functional blocks. This is schematic only and is not intended to define a strict division between different logic elements of such entities. Each functional block may be provided in any suitable manner. It is to be understood that intermediate values described herein as being formed by the at least one processor need not be physically generated by the at least one processor at any point and may merely represent logical values which conveniently describe the processing performed by the at least one processor between its input and output.

The processing system described herein may be embodied in hardware on an integrated circuit. The processing system described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing system configured to perform any of the methods described herein, or to manufacture a processing system comprising any apparatus described herein. An integrated circuit definition dataset may be, for example, an integrated circuit description.

Therefore, there may be provided a method of manufacturing, at an integrated circuit manufacturing system, a processing system as described herein. Furthermore, there may be provided an integrated circuit definition dataset that, when processed in an integrated circuit manufacturing system, causes the method of manufacturing a processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing system will now be described with respect to Figure 20.

Figure 20 shows an example of an integrated circuit (IC) manufacturing system 2002 which is configured to manufacture a processing system as described in any of the examples herein. In particular, the IC manufacturing system 2002 comprises a layout processing system 2004 and an integrated circuit generation system 2006. The IC manufacturing system 2002 is configured to receive an IC definition dataset (e.g. defining a processing system as described in any of the examples herein), process the IC definition dataset, and generate an IC according to the IC definition dataset (e.g. which embodies a processing system as described in any of the examples herein). The processing of the IC definition dataset configures the IC manufacturing system 2002 to manufacture an integrated circuit embodying a processing system and/or hardware logic as described in any of the examples herein.

The layout processing system 2004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 2004 has determined the circuit layout it may output a circuit layout definition to the IC generation system 2006. A circuit layout definition may be, for example, a circuit layout description.

The IC generation system 2006 generates an IC according to the circuit layout definition, as is known in the art. For example, the IC generation system 2006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 2006 may be in the form of computer-readable code which the IC generation system 2006 can use to form a suitable mask for use in generating an IC.

The different processes performed by the IC manufacturing system 2002 may be implemented all in one location, e.g. by one party. Alternatively, the IC manufacturing system 2002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 20 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 20, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of implementing a compressed attention-based neural network on hardware logic, wherein the compressed attention-based neural network comprises a compressed attention layer arranged to implement an attention function, the method comprising, at the compressed attention layer:

   receiving an embedded tensor;
   rearranging and partitioning elements of the embedded tensor to form one or more embedded sub-matrices;
   applying a set of one or more Key weight sub-matrices to the respective one or more embedded sub-matrices, and concatenating the results of applying the one or more Key weight sub-matrices to the respective one or more embedded sub-matrices, to determine a Key matrix;
   applying a set of one or more Query weight sub-matrices to the respective one or more embedded sub-matrices, and concatenating the results of applying the one or more Query weight sub-matrices to the respective one or more embedded sub-matrices, to determine a Query matrix;
   applying a set of one or more Value weight sub-matrices to the respective one or more embedded sub-matrices, and concatenating the results of applying the one or more Value weight sub-matrices to the respective one or more embedded sub-matrices, to determine a Value matrix; and

implementing the attention function using the determined Key matrix, the determined Query matrix and the determined Value matrix.

2. The method of claim 1 wherein said rearranging and partitioning elements of the embedded tensor comprises reordering elements of the embedded tensor.

3. The method of claim 1 or 2 wherein said rearranging and partitioning of the elements of the embedded tensor matches a rearrangement and partitioning of the rows and columns of a Query weight matrix, a Key weight matrix and a Value weight matrix that is used to determine the set of one or more Key weight sub-matrices, the set of one or more Query weight sub-matrices and the set of one or more Value weight sub-matrices.

4. The method of any preceding claim wherein the embedded tensor represents: (i) an input sequence, (ii) an output from an encoder layer in the compressed attention-based neural network, or (iii) an output from a decoder layer in the compressed attention-based neural network,
optionally wherein the method further comprises:

receiving an input sequence;
determining the embedded tensor so that it represents the input sequence; and
providing the embedded tensor to the compressed attention layer.

5. The method of any preceding claim wherein said rearranging and partitioning elements of the embedded tensor to form one or more embedded sub-matrices is performed by: (i) one or more gather layers of the compressed attention layer, or (ii) a gather layer and a splitting layer of the compressed attention layer.

6. The method of any preceding claim wherein the method further comprises applying an output matrix to the result of implementing the attention function before providing an output of the compressed attention layer, and wherein an ordering of the rows and columns of the output matrix is complementary to said rearrangement of the elements of the embedded tensor.

7. The method of any preceding claim wherein said implementing the attention function comprises using a scaled-dot product attention calculation,

optionally wherein the attention function, Attention(Q, K, V), is given by:

$$\text{Attention}(Q, K, V) = \text{softmax}\left(\frac{QK^T}{\sqrt{d_k}}\right)V$$

where $Q$ is the Query matrix, $K^T$ is the transpose of the Key matrix, V is the Value matrix, and $d_k$ is the dimensionality of the Query matrix and the Key matrix.

8. The method of any preceding claim wherein the compressed attention layer is configured to implement multi-head attention,
optionally wherein the compressed attention layer is configured to implement multi-head attention by:

splitting the Key matrix, Query matrix and Value matrix into a plurality of heads;
determining a head attention result for each of the heads; and
concatenating the determined head attention results for each of the heads to determine an attention result for the compressed attention layer.

9. The method of any preceding claim wherein the compressed attention layer is:

a self-attention layer within an encoder of the compressed attention-based neural network;
a self-attention layer within a decoder of the compressed attention-based neural network; or
an encoder-decoder attention layer within a decoder of the compressed attention-based neural network.

10. The method of any preceding claim wherein the compressed attention layer is an encoder-decoder attention layer within a decoder of the compressed attention-based neural network, wherein the Key matrix and the Value matrix are determined using a first embedded tensor representing an output from an encoder layer in the compressed attention-based neural network, and wherein the Query matrix is determined using a second embedded tensor representing an output from a previous layer in the decoder.

11. The method of any preceding claim wherein the compressed attention-based neural network comprises a transformer network, and/or wherein the compressed attention-based neural network is a large language model.

12. The method of any preceding claim wherein the compressed attention-based neural network is implemented to perform one of: natural language processing, language translation, computer vision processing, image processing, text processing and speech processing.

13. Hardware logic configured to implement a compressed attention-based neural network, wherein the compressed attention-based neural network comprises a compressed attention layer arranged to implement an attention function, wherein the compressed attention layer is configured to:

    receive an embedded tensor;
    rearrange and partition elements of the embedded tensor to form one or more embedded sub-matrices;
    apply a set of one or more Key weight sub-matrices to the respective one or more embedded sub-matrices, and concatenate the results of applying the one or more Key weight sub-matrices to the respective one or more embedded sub-matrices, to determine a Key matrix;
    apply a set of one or more Query weight sub-matrices to the respective one or more embedded sub-matrices, and concatenate the results of applying the one or more Query weight sub-matrices to the respective one or more embedded sub-matrices, to determine a Query matrix;
    apply a set of one or more Value weight sub-matrices to the respective one or more embedded sub-matrices, and concatenate the results of applying the one or more Value weight sub-matrices to the respective one or more embedded sub-matrices, to determine a Value matrix; and
    implement the attention function using the determined Key matrix, the determined Query matrix and the determined Value matrix.

14. A compressed attention-based neural network comprising a compressed attention layer arranged to implement an attention function, wherein the compressed attention layer is configured to:

    receive an embedded tensor;
    rearrange and partition elements of the embedded tensor to form one or more embedded sub-matrices;
    apply a set of one or more Key weight sub-matrices to the respective one or more embedded sub-matrices, and concatenate the results of applying the one or more Key weight sub-matrices to the respective one or more embedded sub-matrices, to determine a Key matrix;
    apply a set of one or more Query weight sub-matrices to the respective one or more embedded sub-matrices, and concatenate the results of applying the one or more Query weight sub-matrices to the respective one or more embedded sub-matrices, to determine a Query matrix;
    apply a set of one or more Value weight sub-matrices to the respective one or more embedded sub-matrices, and concatenate the results of applying the one or more Value weight sub-matrices to the respective one or more embedded sub-matrices, to determine a Value matrix; and
    implement the attention function using the determined Key matrix, the determined Query matrix and the determined Value matrix.

15. A computer readable storage medium having encoded thereon the compressed attention-based neural network of claim 14.

Output for Decoder / Prediction heads

**FIGURE 1A**

Output for Prediction heads

**FIGURE 1B**

**FIGURE 1C**

Attention-Based Neural Network ("Transformer") 200

216 — Softmax

202 Encoder Stack  204 Decoder Stack

Linear 214

Encoder m $208_m$ → Decoder n $212_n$

Encoder 2 $208_2$ → Decoder 2 $212_2$

Encoder 1 $208_1$ → Decoder 1 $212_1$

Embedding 206    Embedding 210

Input    Target

**FIGURE 2A**

**FIGURE 2B**

**FIGURE 3**

FIGURE 4

EP 4 621 652 A1

500

Processing system

| Processor(s) | | Memory |
| 504 | | 506 |

400

System for implementing an attention-based neural network

Hardware logic
402

**FIGURE 5**

600

| | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| 1 | | | | | | | × | | | × | | | | |
| 2 | | × | | × | | | | | | × | | | | |
| 3 | × | | × | | | | | | × | | | | | |
| 4 | × | | | | | | × | | × | × | × | | | |
| 5 | | | | | × | × | | | | | | | | × |
| 6 | × | | | | | | | | × | | | | | |
| 7 | | × | | × | | | × | | | | | | | |
| 8 | | | | | | | | | | | × | | × | |
| 9 | | | | | × | × | | × | | | | | | |
| 10 | | | × | | × | × | | | | | | | × | × |
| 11 | | | | | | | | | | | | × | | × |
| 12 | | | | × | × | | × | × | | | | × | | |
| 13 | × | × | | | | × | | | | × | | | × | |
| 14 | | | | | | | | | | | × | | × | |

**FIGURE 6**

710

| | 2 | 7 | 10 | 4 | 9 | 13 | 3 | 1 | 11 | 6 | 8 | 14 | 12 | 5 |
|---|---|---|---|---|---|---|---|---|---|---|---|---|---|---|
| 7 | × | × | | × | | | | | | | | | | |
| 1 | | × | × | | | | | | | | | | | |
| 2 | × | | × | × | | | | | | | | | | |
| 6 | | | | | × | | | × | | | | | | |
| 8 | | | | | | × | | | × | | | | | |
| 3 | | | | | × | | × | × | | | | | | |
| 14 | | | | | | × | | | × | | | | | |
| 9 | | | | | | | | | | × | × | | | × |
| 11 | | | | | | | | | | | | × | × | |
| 5 | | | | | | | | | | × | | × | | × |
| 13 | × | | × | | | × | | | | × | | × | | |
| 12 | | × | | × | | | | | | | | × | × | × |
| 4 | × | × | | × | | | × | × | | | | | | |
| 10 | | | | | × | × | | | × | | | × | × | × |

702-1

702-2

702-3

702-4

**FIGURE 7**

EP 4 621 652 A1

FIGURE 8

EP 4 621 652 A1

**FIGURE 9**

**FIGURE 10**

FIGURE 11A

FIGURE 11B

EP 4 621 652 A1

```
┌─────────────────────────────────────────┐
│  Receive an attention-based neural network │ ⌇ S1202
└─────────────────────────────────────────┘
                    │
                    ▼
┌─────────────────────────────────────────┐
│        Determine a combined matrix        │ ⌇ S1204
└─────────────────────────────────────────┘
                    │
                    ▼
┌─────────────────────────────────────────┐
│  Rearrange the rows and/or columns of the │ ⌇ S1206
│            combined matrix                 │
└─────────────────────────────────────────┘
                    │
                    ▼
┌─────────────────────────────────────────┐
│ Rearrange the rows and/or columns of the Key │
│ weight matrix, the Query weight matrix and the │ ⌇ S1208
│     Value weight matrix to match the       │
│ rearrangement of the rows and/or columns of │
│            the combined matrix             │
└─────────────────────────────────────────┘
                    │
                    ▼
┌─────────────────────────────────────────┐
│  Rearrange the rows and/or columns of the │
│      output matrix in dependence on the    │ ⌇ S1209
│ rearrangement of the rows and/or columns of │
│            the combined matrix             │
└─────────────────────────────────────────┘
                    │
                    ▼
┌─────────────────────────────────────────┐
│  Output a compressed attention-based neural │ ⌇ S1210
│                network                     │
└─────────────────────────────────────────┘
```

**FIGURE 12**

FIGURE 13

FIGURE 14A

FIGURE 14B

FIGURE 15A

FIGURE 15C

FIGURE 15B

FIGURE 15D

EP 4 621 652 A1

Receive an embedded tensor at a compressed attention
layer of a compressed attention-based neural network ∽ S1602

↓

Rearrange and partition elements of the embedded
tensor to form one or more embedded sub-matrices ∽ S1604

S1606

S1608

S1610

Apply a set of one or more Key
weight sub-matrices to the
respective one or more embedded
sub-matrices and concatenate the
results to determine a Key matrix

Apply a set of one or more Query
weight sub-matrices to the
respective one or more embedded
sub-matrices and concatenate the
results to determine a Query matrix

Apply a set of one or more Value
weight sub-matrices to the
respective one or more embedded
sub-matrices and concatenate the
results to determine a Value matrix

↓

Implement an attention function using the Key matrix,
the Query matrix and the Value matrix ∽ S1612

↓

Apply an output matrix having an ordering of rows and
columns which is complementary to the rearrangement
of the elements of the embedded tensor ∽ S1613

↓

Process the output of the compressed attention layer in
the compressed attention-based neural network ∽ S1614

**FIGURE 16**

52

FIGURE 17

FIGURE 18

**FIGURE 19**

**FIGURE 20**

## EUROPEAN SEARCH REPORT

**Application Number**

EP 25 16 4210

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FAN HONGXIANG ET AL: "Adaptable Butterfly Accelerator for Attention-Based NNs via Hardware and Algorithm Co-Design", PROCEEDINGS OF THE 55TH ANNUAL IEEE/ACM INTERNATIONAL SYMPOSIUM ON MICROARCHITECTURE, ACMPUB27, NEW YORK, NY, USA, 1 October 2022 (2022-10-01), pages 599-615, XP059675908, DOI: 10.1109/MICRO56248.2022.00050 ISBN: 979-8-4007-0492-5 * page 599 - page 607 * * figures 2, 4, 5, 8-11 * | 1-15 | INV. G06N3/0475 G06N3/0495 |
| A | SIYUAN LU ET AL: "Hardware Accelerator for Multi-Head Attention and Position-Wise Feed-Forward in the Transformer", ARXIV.ORG, CORNELL UNIVERSITY LIBRARY, 201 OLIN LIBRARY CORNELL UNIVERSITY ITHACA, NY 14853, 18 September 2020 (2020-09-18), XP081765852, * I.- IV. * | 1-15 | |
| A | ZILONG HUANG ET AL: "Shuffle Transformer: Rethinking Spatial Shuffle for Vision Transformer", ARXIV.ORG, CORNELL UNIVERSITY LIBRARY, 201 OLIN LIBRARY CORNELL UNIVERSITY ITHACA, NY 14853, 7 June 2021 (2021-06-07), XP081985981, * the whole document * | 1-15 | **TECHNICAL FIELDS SEARCHED (IPC)**<br><br>G06N |
| A | US 2023/409882 A1 (AHMED IBRAHIM [CA] ET AL) 21 December 2023 (2023-12-21) * paragraph [0001] - paragraph [0080] * | 1-15 | |

The present search report has been drawn up for all claims

| Place of search | Date of completion of the search | Examiner |
|---|---|---|
| The Hague | 23 July 2025 | Keresztury, Bence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 4210

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2025

| Patent document cited in search report | Publication date | Patent family member(s) | Publication date |
|---|---|---|---|
| US 2023409882 A1 | 21-12-2023 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2403969 A

- GB 2403991 A

**Non-patent literature cited in the description**

- **VASWANI et al.** Attention is all you need. *Advances in Neural Information Processing Systems 30 (NIPS)*, 2017, https://arxiv.org/abs/1706.03762